(19) Europäisches Patentamt
European Patent Office
Office européen des brevets

(11) EP 4 246 607 B1

(12) **EUROPEAN PATENT SPECIFICATION**

(45) Date of publication and mention of the grant of the patent:
**25.12.2024 Bulletin 2024/52**

(21) Application number: **23159266.8**

(22) Date of filing: **28.02.2023**

(51) International Patent Classification (IPC):
***H01M 4/04*** *(2006.01)* ***H01M 4/131*** *(2010.01)*
***H01M 4/1391*** *(2010.01)* *H01M 4/485 (2010.01)*
*H01M 4/525 (2010.01)* *H01M 4/62 (2006.01)*
*H01M 4/02 (2006.01)*

(52) Cooperative Patent Classification (CPC):
**H01M 4/0404; H01M 4/131; H01M 4/1391;**
H01M 4/485; H01M 4/525; H01M 4/622;
H01M 2004/021; Y02E 60/10

(54) **ELECTRODE, ELECTROCHEMICAL ELEMENT, ELECTRODE PRODUCTION APPARATUS, AND ELECTRODE PRODUCTION METHOD**

ELEKTRODE, ELEKTROCHEMISCHES ELEMENT, ELEKTRODENHERSTELLUNGSVORRICHTUNG UND ELEKTRODENHERSTELLUNGSVERFAHREN

ÉLECTRODE, ÉLÉMENT ÉLECTROCHIMIQUE, APPAREIL DE PRODUCTION D'ÉLECTRODE ET PROCÉDÉ DE PRODUCTION D'ÉLECTRODE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **16.03.2022 JP 2022040933**
**23.12.2022 JP 2022206417**

(43) Date of publication of application:
**20.09.2023 Bulletin 2023/38**

(73) Proprietor: **Ricoh Company, Ltd.**
**Tokyo 143-8555 (JP)**

(72) Inventors:
- **Li, Muxin**
  **Tokyo, 143-8555 (JP)**
- **Goto, Shun**
  **Tokyo, 143-8555 (JP)**
- **Dan, Tatsuya**
  **Tokyo, 143-8555 (JP)**
- **Kida, Hitoshi**
  **Tokyo, 143-8555 (JP)**
- **Kuriyama, Hiromichi**
  **Tokyo, 143-8555 (JP)**

(74) Representative: **Marks & Clerk LLP**
**15 Fetter Lane**
**London EC4A 1BW (GB)**

(56) References cited:
**JP-A- 2008 010 253**
**JP-A- 2019 110 110**
**US-A1- 2012 015 253**
**US-A1- 2020 243 850**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 246 607 B1

## Description

BACKGROUND

Technical Field

The present disclosure relates to an electrode, an electrochemical element, an electrode production apparatus, and an electrode production method.

Related Art

In recent years, an electrochemical element such as a lithium-ion secondary battery, an electric double layer capacitor, a lithium-ion capacitor, or a redox capacitor is expanding rapidly in a wide range of applications from a small consumer device such as a wearable device or a smartphone to a large device such as an electric vehicle or a stationary storage battery.

In response to such diversifying needs for the electrochemical element, it is difficult to flexibly switch manufactured products and the like using the conventional electrode production method. Thus, it is desired to provide a new electrode production method. Regarding this, for example, there has been proposed a technique in which a flat electrode mixture layer is pressed with a mold to form a fine concavo-convex shape on the surface, thereby increasing the surface area of the electrode (e.g., refer to Japanese Unexamined Patent Application Publication No. 2008-010253).

According to this proposal, it is expected that the increase in the surface area caused by forming the fine concavo-convex shape on the electrode surface improves performance of the electrochemical element.

However, in the conventional technique, the concavo-convex shape is formed by pressing the electrode mixture layer with the mold. As a result, a porosity in the electrode mixture layer with the concavo-convex shape may become uneven and the performance of the electrochemical element may be deteriorated. Further, in the conventional technique, the mold needs to be changed each time the surface shape of the electrode mixture layer is changed, making it necessary to examine a press condition and the like and thus causing a reduction in production efficiency and an increase in costs.

JP-A-2019110110 discloses an electrode that comprises: an electrode base; an electrode mixture material layer formed on the electrode base and containing an active material; and an insulating layer formed on the electrode mixture material layer. The insulating layer has an uneven structure having portions thin in film thickness and portions thick in thickness.

US-A-2012/015253 discloses stripe-shaped pattern elements projecting from a surface of a substantially flat negative-electrode current collector that are formed by applying an application liquid containing a negative-electrode active material by a nozzle-scan coating method.

SUMMARY

An object of the present disclosure is to provide an electrode including an electrode mixture layer with a uniform porosity and capable of improving performance of an electrochemical element. The invention is set out in the appended set of claims.

According to the present disclosure, it is possible to provide the electrode including the electrode mixture layer with the uniform porosity and capable of improving a capacity retention rate.

BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:

FIG. 1 is a schematic cross-sectional view of an electrode of the present disclosure.
FIG. 2 is a partially enlarged view of FIG. 1.
FIG. 3 is a schematic diagram obtained by binarizing an SEM image of an electrode mixture layer.
FIG. 4 is a schematic diagram illustrating an electrode production apparatus of the present embodiment.
FIG. 5 is a schematic diagram illustrating another electrode production apparatus of the present embodiment.
FIG. 6 is a schematic diagram for explaining an electrode production method of the present embodiment.
FIG. 7 is a schematic diagram illustrating a modification of a liquid ejection device.
FIG. 8 is a configuration diagram illustrating a printing unit using a drum-shaped intermediate transfer body in the electrode production apparatus of the present embodiment.

FIG. 9 is a configuration diagram illustrating a printing unit using an endless belt-like intermediate transfer body in the electrode production apparatus of the present embodiment.

FIG. 10 is a schematic diagram illustrating a formation pattern of the electrode mixture layer in the electrode production method.

FIG. 11 is a schematic diagram illustrating another formation pattern of the electrode mixture layer in the electrode production method.

FIG. 12 is a schematic diagram illustrating yet another formation pattern of the electrode mixture layer in the electrode production method.

FIG. 13A and FIG. 13B are schematic diagrams illustrating yet another formation pattern of the electrode mixture layer in the electrode production method.

FIG. 14 is a schematic diagram illustrating a moving object equipped with an all-solid-state battery as an electrochemical element of the present disclosure.

FIG. 15 is a schematic diagram illustrating a mold used for forming a negative electrode mixture layer having a concavo-convex shape in Comparative example 2.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

(Electrode)

In a first embodiment, an electrode of the present disclosure includes a base material and an electrode mixture layer on the base material, in which, in a cross section of the electrode in a thickness direction viewed from at least one direction perpendicular to the thickness direction, the electrode mixture layer includes convex portions and non-convex portions each positioned between two convex portions adjacent to each other among the convex portions, and provided that a porosity of the non-convex portions is defined as d1 and a porosity of the non-convex portions is defined as d2, a ratio (d1/d2) is 0.82 or more and 1.22 or less.

In the present disclosure, "a thickness direction viewed from at least one direction perpendicular to the thickness direction" may be simply referred to as "a thickness direction".

In a second embodiment, an electrode of the present disclosure includes a base material and an electrode mixture layer on the base material, in which, in a cross section of the electrode in a thickness direction, the electrode mixture layer includes convex portions and non-convex portions each positioned between two convex portions adjacent to each other among the convex portions, and in the cross section, a line corresponding to a surface of the non-convex portions, and a line corresponding to a surface of the convex portions are both curved.

In the conventional technique, a flat electrode mixture layer is pressed with a mold to form a concavo-convex shape with a height difference of 5 μm to 100 μm on a surface, making it difficult to form the electrode mixture layer with a uniform porosity and thus causing deterioration of performance of the electrochemical element.

In this embodiment, as illustrated in FIG. 1, an electrode 10 includes a base material 1 and an electrode mixture layer 2 formed on the base material 1.

As illustrated in FIG. 1 and FIG. 2, the electrode mixture layer 2 includes, in a cross section of the electrode in a thickness direction, a plurality of convex portions 2a and a non-convex portion 2b positioned between a first convex portion 2a1 and a second convex portion 2a2 adjacent to each other among the plurality of convex portions.

A distance from a contact surface between the base material 1 and the electrode mixture layer 2 to a surface of the non-convex portion 2b facing the contact surface is defined as a height h1 of the non-convex portion.

A distance from the contact surface between the base material 1 and the electrode mixture layer 2 to a surface of the convex portion facing the contact surface is defined as a height h2 of the convex portion.

A distance between vertices of one of the convex portions and one of the non-convex portions adjacent to each

other in a direction perpendicular to the thickness direction is defined as a1.

Note that, in the present embodiment, the convex portions and the non-convex portions of the electrode mixture layer are alternately and repeatedly formed in a substantially periodic manner.

In the present specification and claims, the vertex of the convex portion and the vertex of the non-convex portion are the point at which the h2 is maximum in the convex portion and the point at which the h1 is the minimum in the non-convex portion, respectively, in each repeat.

h3 obtained by subtracting the height h1 of the vertex of the non-convex portion from the height h2 of the vertex of the adjacent convex portion is 1.4 times or more the median diameter D50 of the active material included in the electrode mixture layer. Such a shape is distinguished from a substantially planar shape in which h3 is less than 1.4 times.

Thus, it is clear that the convex portion and the non-convex portion do not include any convex portion and any non-convex portion formed on a surface of the active material layer by only one active material particle included in the electrode mixture layer.

As illustrated in FIG. 2, h3(i.e., h2-h1) is obtained by subtracting the height h1 of the non-convex portion 2b from the height h2 of the convex portion. A straight line L1 parallel to the base material 1 is a line bisecting h3 (h31=h32). Straight lines L2 and L3 and straight lines L4 and L5 are lines vertically drawn to the base material 1 from intersections of the straight line L1 with the first convex portion 2a1 and the second convex portion 2a2, respectively. The first convex portion 2a1 and the second convex portion 2a2 adjacent to each other via the non-convex portion 2b are regions surrounded by the straight lines L2 and L3 and the straight lines L4 and L5, respectively. Further, the non-convex portion 2b is a region surrounded by the straight lines L3 and L4.

In this configuration, a distance D1 between L2 and L3 in the convex portion is preferably 10 times or more as long as $D_{max}$, which is the maximum particle diameter of the active material particles included in the electrode mixture layer.

The height h1 of the non-convex portion, the height h2 of the convex portion, and the distance a1 between the vertices of the convex portion and the non-convex portion adjacent to each other can be measured by, for example, a surface profile using a laser microscope.

In the present disclosure, an electrode mixture layer includes convex portions and non-convex portions each positioned between two convex portions (e.g., the first convex portion and the second convex portion) adjacent to each other among the convex portions in a cross section of the electrode in a thickness direction, and provided that a porosity of the non-convex portions is defined as d1 and a porosity of the convex portions is defined as d2, a ratio (d1/d2) is 0.82 or more and 1.22 or less, preferably 0.85 or more and 1.15 or less.

In a case where the ratio (d1/d2) is 0.82 or more and 1.22 or less, voids in the electrode mixture layer are uniformly distributed, making it possible to sufficiently improve output of the electrochemical element.

In a case where the ratio (d1/d2) is less than 0.82 or more than 1.22, the voids in the electrode mixture layer are unevenly distributed, resulting in uneven output of the electrochemical element, which makes it difficult to improve performance of the electrochemical element.

In this embodiment, the porosity d1 of the non-convex portion and the porosity d2 of the convex portion can be obtained as follows.

A main component of a model 53 embedding epoxy resin (Lot No.53512040149, manufactured by Sankei Co., Ltd.) and a curing agent (Lot No.53572040342, manufactured by Sankei Co., Ltd.) are well mixed at a volume ratio of 1:2, and the electrode mixture layer is embedded with the resin using a vacuum impregnation device (Buehler vacuum impregnation equipment I, manufactured by Sankei Co., Ltd.), followed by curing for 24 hours. The electrode mixture layer embedded in the epoxy resin is processed with a cross-section polisher (manufactured by JEOL Ltd.), and a cross section is observed with a desktop scanning electron microscope SEM (Phenom Prox, manufactured by Jusco International Co., Ltd.) to take an SEM image of the electrode mixture layer.

The SEM image of the electrode mixture layer thus obtained is binarized using image processing software (Image-Pro Premier version 9.2 64-bit, manufactured by Hakuto Co., Ltd.) as illustrated in FIG. 3 to obtain the area of regions derived from particles and the area of regions derived from voids. Then, the porosity of the convex portion (e.g., the first convex portion) and the non-convex portion is calculated by dividing the area derived from the voids by the total area. Note that the above-mentioned method uses the software for binarization. For example, in a binarized image, areas with a density higher than 50% may be determined as particles or voids, and areas with a density of 50% or less may be determined as voids or particles. In FIG. 3, particles 20 are indicated by white areas, and voids 21 are indicated by black areas.

Note that the definition of the first convex portion, the second convex portion, and the non-convex portion are as described above.

In the present disclosure, in a cross section in a thickness direction, a line corresponding to the surface of the non-convex portion positioned between the first convex portion and the second convex portion adjacent to each other among the plurality of convex portions and a line corresponding to the surface of the first convex portion are curved.

The concavo-convex shape formed with the conventional mold is rectangular (linear), whereas in the present disclosure, the concavo-convex shape is curved.

It can be confirmed whether the line corresponding to the surface of the non-convex portion positioned between the first convex portion and the second convex portion adjacent to each other among the plurality of convex portions and the line corresponding to the surface of the first convex portion are curved by obtaining a surface profile using a laser microscope, a stylus type step profiler, or the like.
Note that, in the present specification and claims, in a cross section in a thickness direction, a line corresponding to a surface of a non-convex portion located between a first convex portion and a second convex portion adjacent to each other among a plurality of convex portions, and a line corresponding to a surface of the first convex portion do not include lines corresponding to surfaces of a convex portion and a non-convex portion formed on the surface of the active material layer by only one active material particle included in the electrode mixture layer, as described above.
According to the present invention, a lower limit of the ratio (h1/h2) of the height h1 ($\mu$m) of the non-convex portion and the height h2 ($\mu$m) of the convex portion is 0.71 or more, preferably 0.80 or more.
In a case where the ratio (h1/h2) is less than 0.71, the height of the convex portion is too large compared with the height of the non-convex portion, and the pressure applied to the convex portion in a pressing process causes the convex portion to break. As a result, the surface shape of the electrode is easily deformed and a defect such as a crack occurs, making it difficult to improve the performance of the electrochemical element.
Further, an upper limit of the ratio (h1/h2) of the height h1 ($\mu$m) of the non-convex portion and the height h2 ($\mu$m) of the convex portion is preferably 0.98 or less, more preferably 0.95 or less.
In a case where the ratio (h1/h2) exceeds 0.98, it becomes difficult to provide the concavo-convex shape sufficient to increase the surface area of the electrode, making it difficult to improve the performance of the electrochemical element.
In one aspect of the present disclosure, provided that a distance between vertices of the convex portion and the non-convex portion adjacent to each other is defined as a1, a lower limit of the following formula (h2-h1)/a1 preferably satisfies 0.006 or more.
In a case where the following formula (h2-h1)/a1 is less than 0.0060, it is difficult to provide the concavo-convex shape sufficient to increase the surface area of the electrode, making it difficult to improve the performance of the electrochemical element.
Further, an upper limit of the following formula (h2-h1)/a1 satisfies preferably 0.050 or less, more preferably 0.048 or less.
In a case where the following formula (h2-h1)/a1 exceeds 0.050, the convex portion becomes narrower than the non-convex portion, and the pressure applied to the convex portion in the pressing process causes the convex portion to break. As a result, the surface shape of the electrode is easily deformed and a defect such as a crack occurs, making it difficult to improve the performance of the electrochemical element.

<Base material>

The base material is a highly conductive material. Aluminum is used for a positive electrode base material and copper is used for a negative electrode base material. However, the base material according to the present embodiment is not limited to the above materials.

<Electrode mixture layer>

The electrode mixture layer including an active material such as a positive electrode active material or a negative electrode active material preferably includes a conductive auxiliary agent and a binder, and further includes other components as necessary.

-Positive electrode active material-

The positive electrode active material is not particularly limited as long as the positive electrode active material can be intercalated or deintercalated with an alkali metal ion. However, an alkali-metal-containing transition metal compound can be used as the positive electrode active material.
Examples of the alkali-metal-containing transition metal compound include, but are not limited to, a lithium-containing transition metal compound such as a composite oxide including one or more elements selected from the group consisting of cobalt, manganese, nickel, chromium, iron, and vanadium, and lithium.
Examples of the lithium-containing transition metal compound include, but are not limited to, lithium cobalt oxide, lithium nickel oxide, and lithium manganese oxide.
As the alkali-metal-containing transition metal compound, a polyanionic compound having a tetrahedron represented by $XO_4$ ("X" represents P, S, As, Mo, W, Si, etc.) in the crystal structure can also be use. Among the alkali-metal-containing transition metal compounds, a lithium-containing transition metal phosphate compound such as lithium

iron phosphate or lithium vanadium phosphate is preferable in terms of cycle characteristics, and lithium vanadium phosphate is particularly preferable in terms of lithium diffusion coefficient and output characteristics.

Note that, in terms of electron conductivity, it is preferable that the surface of the polyanionic compound is coated with a conductive auxiliary agent such as a carbon material to form a composite.

-Negative electrode active material-

The negative electrode active material is not particularly limited as long as the negative electrode active material can be intercalated or deintercalated with an alkali metal ion. However, a carbon material including graphite having a graphite-type crystal structure can be used as the negative electrode active material.

Examples of the carbon material include, but are not limited to, natural graphite, synthetic graphite, poorly-graphitizable carbon (hard carbon), and easily-graphitizable carbon (soft carbon).

Examples of the negative electrode active material other than the carbon material include, but are not limited to, lithium titanate and titanium oxide.

Further, in terms of energy density of the electrochemical element, it is preferable to use a high-capacity material such as, for example, silicon, tin, a silicon alloy, a tin alloy, silicon oxide, silicon nitride, or tin oxide as the negative electrode active material.

A mode diameter of the active material is preferably 0.5 μm or more and 10 μm or less, more preferably 3 μm or more and 10 μm or less. In a case where the active material has the mode diameter of 0.5 μm or more and 10 μm or less, an ejection defect is less likely to occur when a liquid composition is ejected by a liquid ejection method. Further, in a case where the active material has the mode diameter of 3 μm or more and 10 μm or less, an electrode with better electrical characteristics can be obtained. In the measured particle size distribution of the active material in the liquid composition, the diameter having the maximum value of the distribution was calculated as the mode diameter.

A method for measuring the mode diameter of the active material is not particularly limited and can be appropriately selected according to the purpose. For example, the mode diameter can be measured according to ISO 13320:2009. A device used for the measurement is not particularly limited and can be appropriately selected according to the purpose. For example, a laser diffraction particle size distribution analyzer (Mastersizer 3000, manufactured by Malvern Panalytical Ltd.) and the like can be mentioned.

The maximum particle diameter $D_{max}$ of the active material is preferably 30 μm or less, more preferably 20 μm or less, still more preferably 10 μm or less.

In a case where the maximum particle diameter $D_{max}$ of the active material is 30 μm or less, an ejection defect is less likely to occur when the liquid composition is ejected by a liquid ejection method.

A method for measuring the maximum particle diameter $D_{max}$ of the active material is not particularly limited and can be appropriately selected according to the purpose. For example, the maximum particle diameter $D_{max}$ can be measured according to ISO 13320:2009.

A device used for the measurement is not particularly limited and can be appropriately selected according to the purpose. Examples of the device include, but are not limited to, a laser diffraction particle size distribution analyzer (Mastersizer 3000 manufactured by Malvern Panalytical Ltd.).

The median diameter D50 of the active material is preferably 15 μm or less, more preferably 10 μm or less, still more preferably 5 μm or less.

In a case where the median diameter D50 of the active material is 15 μm or less, it is possible to improve coating efficiency and battery characteristics.

A method for measuring the median diameter D50 of the active material is not particularly limited and can be appropriately selected according to the purpose. For example, the median diameter D50 can be measured according to ISO 13320:2009.

A device used for the measurement is not particularly limited and can be appropriately selected according to the purpose. Examples of the device include, but are not limited to, a laser diffraction particle size distribution analyzer (Mastersizer 3000 manufactured by Malvern Panalytical Ltd.).

-Conductive auxiliary agent-

Examples of the conductive auxiliary agent that can be used include, but are not limited to, conductive carbon black produced by a furnace method, an acetylene method, a gasification method, or the like, and a carbon material such as a carbon nanofiber, a carbon nanotube, graphene, or a graphite powder. Examples of the conductive auxiliary agent other than the carbon material, which can be used, include, but are not limited to, a metal particle such as aluminum, and a metal fiber. Note that the conductive auxiliary agent may be previously combined with the active material.

-Binder-

The binder is not particularly limited and can be appropriately selected according to the purpose. Examples of the binder include, but are not limited to, a polyamide compound, a polyimide compound, a polyamide-imide compound, ethylene-propylene-butadiene rubber (EPBR), styrene-butadiene rubber (SBR), nitrile-butadiene rubber (NBR), isoprene rubber, polyisobutene, polyethylene glycol (PEO), polymethylmethacrylate acid (PMMA), and polyethylene vinyl acetate (PEVA). These materials may be used singly or in combination of two or more.

-Other components-

Other components are not particularly limited and can be appropriately selected according to the purpose. Examples of other components include, but are not limited to, a dispersant, a surfactant, a pH adjuster, a rust inhibitor, a preservative, an antifungal agent, an antioxidant, a reduction inhibitor, an evaporation accelerator, and a chelating agent.

-Other layers-

Other layers are not particularly limited and can be appropriately selected according to the purpose. Examples of other layers include, but are not limited to, an insulating layer and a protective layer.
The electrode mixture layer can be produced using a liquid composition.

<Liquid composition>

The liquid composition includes an active material, a conductive auxiliary agent, a dispersion medium, and a dispersant, and, if necessary, other components.
The active material and the conductive auxiliary agent are the same as the active material and the conductive auxiliary agent in the electrode mixture layer described above.

-Dispersion medium-

Examples of the dispersion medium include, but are not limited to, an aqueous dispersion medium such as water, ethylene glycol, or propylene glycol, N-methyl-2-pyrrolidone, 2-pyrrolidone, cyclohexanone, butyl acetate, mesitylene, 2-n-butoxymethanol, 2-dimethylethanol, and N,N-dimethylacetamide. These materials may be used singly or in combination of two or more.

-Dispersant-

The dispersant is not particularly limited as long as the dispersant can improve dispersibility of the active material in the liquid composition, and the dispersant can be appropriately selected according to the purpose. Examples of the dispersant include, but are not limited to, a polymer dispersant such as a polyethylene oxide-based dispersant, a polypropylene oxide-based dispersant, a polycarboxylic acid-based dispersant, a naphthalenesulfonic acid formalin condensate-based dispersant, a polyethylene glycol-based dispersant, a polycarboxylic acid partial alkyl ester-based dispersant, a polyether-based dispersant, or a polyalkylenepolyamine-based dispersant, a low-molecular-weight dispersant such as an alkylsulfonic acid-based dispersant, a quaternary ammonium-based dispersant, a higher alcohol alkylene oxide-based dispersant, a polyhydric alcohol ester-based dispersant, or an alkylpolyamine-based dispersant, and an inorganic dispersant such as a polyphosphatebased dispersant. These materials may be used singly or in combination of two or more.

-Other components-

Other components are not particularly limited and can be appropriately selected according to the purpose. Examples of other components include, but are not limited to, a binder, a surfactant, a pH adjuster, a rust inhibitor, a preservative, an antifungal agent, an antioxidant, a reduction inhibitor, an evaporation accelerator, and a chelating agent.
The viscosity of the liquid composition at 25°C is preferably 200 mPa·s or less, more preferably 100 mPa·s or less, and still more preferably 50 mPa·s or less. In a case where the viscosity is 200 mPa·s or less, there is an advantage that an ejection defect is less likely to occur when the liquid composition is ejected by a liquid ejection device. Note that, in the present specification, the viscosity of 200 mPa·s or less may be referred to as low viscosity.
A method for measuring the viscosity of the liquid composition is not particularly limited and can be appropriately selected according to the purpose. For example, the viscosity can be measured according to JIS Z 8803. A device used

for the measurement is not particularly limited and can be appropriately selected according to the purpose. For example, a model TV25 viscometer (cone & plate viscometer, manufactured by Toki Sangyo) and the like can be mentioned.

(Electrode production method and electrode production apparatus)

A method for producing an electrode of the present disclosure is an electrode production method that produces an electrode of the present disclosure.

The method includes an application process of applying a liquid composition including an active material and a dispersion medium onto a base material being conveyed in a conveyance direction to form an electrode mixture layer including a plurality of convex portions in a cross section in a thickness direction, and further including other processes as necessary.

It is preferable that the liquid composition is ejected in at least one of the conveyance direction or a direction orthogonal to the conveyance direction, thereby forming the convex portions.

An apparatus for producing an electrode of the present disclosure is an electrode production apparatus that produces an electrode of the present disclosure,
including an application means for applying a liquid composition including an active material and a dispersion medium onto a base material being conveyed in a conveyance direction to form an electrode mixture layer including a plurality of convex portions in a cross section in a thickness direction, and further including other means as necessary.

It is preferable that the liquid composition is ejected in at least one of the conveyance direction or a direction orthogonal to the conveyance direction, thereby forming the convex portions.

A method for applying the liquid composition is not particularly limited. Examples of the method include, but are not limited to, a liquid ejection method such as an inkjet method, a spray coating method, or a dispenser method, a spin coating method, a casting method, a micro gravure coating method, a gravure coating method, a bar coating method, a roll coating method, a wire bar coating method, a dip coating method, a slit coating method, a capillary coating method, a nozzle coating method, a gravure printing method, a screen printing method, a flexographic printing method, an offset printing method, and a reverse printing method. Among these methods, an inkjet method is particularly preferable. By using the inkjet method, an electrode can be produced in any shape in a non-contact manner. As a result, there is an advantage such as little loss of the active material caused by die punching in the electrode production process.

[Embodiment in which electrode mixture layer is formed by directly applying liquid composition to base material]

FIG. 4 is a schematic diagram illustrating an electrode production apparatus (liquid ejection device) for achieving an electrode production method of the present embodiment.

An electrode production apparatus 500 is an apparatus for producing an electrode mixture layer using the above-mentioned liquid composition.

The electrode production apparatus 500 includes a printing unit 100 that performs an application process of applying a liquid composition onto a printing base material 34 to form a liquid composition layer, and a heating unit 200 as necessary.

The electrode production apparatus 500 includes a conveying unit 35 for conveying the printing base material 34. The conveying unit 35 conveys the printing base material 34 to the printing unit 100 and, if necessary, the heating unit 200 in this order at preset speed.

-Printing unit 100-

The printing unit 100 includes a printing section 31a, which is an example of an application means for achieving the application process of applying the liquid composition for forming the electrode mixture layer onto the printing base material 34, a storage container 31b for storing the liquid composition, and a supply tube 31c for supplying a liquid composition 37 stored in the storage container 31b to the printing section 31a.

The storage container 31b stores the liquid composition 37, and the printing unit 100 ejects the liquid composition 37 from the printing section 31a and applies the liquid composition 37 onto the printing base material 34 to form a liquid composition layer as a thin film.

Note that the storage container 31b may be integrated with the electrode production apparatus or may be detachable from the electrode production apparatus.

Further, the storage container 3 1b may be a container used for filling a storage container integrated with the electrode production apparatus or a storage container detachable from the electrode production apparatus.

The storage container 31b and the supply tube 31c can be freely selected as long as the storage container and the supply tube can stably store and supply the liquid composition 37, respectively.

-Heating unit 200-

As illustrated in FIG. 4, the heating unit 200 includes a heating section 33a and heats the liquid composition layer formed by the printing unit 100 by the heating section 33a, thereby performing a liquid removal process in which the remaining liquid is dried and removed.
In this manner, an electrode mixture layer can be formed.
The heating unit 200 may remove the liquid under reduced pressure.
The heating section 33a is not particularly limited as long as the heating section 33a fulfills the above-mentioned functions. Examples of the heating section include, but are not limited to, an IR heater and a hot air heater.
Further, the heating temperature and time can be appropriately selected according to the boiling point of the liquid included in the liquid composition layer and the film thickness to be formed.
FIG. 5 is a schematic diagram illustrating another example of the electrode production apparatus (liquid ejection device) for achieving the electrode production method of the present embodiment.
A liquid ejection device 300' controls a pump 310 and valves 311 and 312 in a manner such that the liquid composition can circulate through a liquid ejection head 306, a tank 307, and a tube 308.
Further, the liquid ejection device 300' is provided with an external tank 313. When the liquid composition in the tank 307 is reduced, the liquid ejection device 300' can supply the liquid composition from the external tank 313 to the tank 307 by controlling the pump 310 and valves 311, 312, and 314.
Using the above-mentioned electrode production apparatus makes it possible to eject the liquid composition to the base material with pinpoint accuracy.
FIG. 6 is a schematic diagram illustrating another example of the electrode production apparatus (liquid ejection device) for achieving the electrode production method of the present embodiment.
A method for producing an electrode 210 having the electrode mixture layer on the base material includes a process of sequentially ejecting a liquid composition 12A onto a base material 211 using the liquid ejection device 300'.
First, the long base material 211 is prepared.
Then, the base material 211 is wound around a cylindrical core and set on a feed roller 304 and a take-up roller 305 such that the side on which the electrode mixture layer is formed faces upward in FIG. 6.
In this configuration, the feed roller 304 and the take-up roller 305 rotate counterclockwise, and the base material 211 is conveyed from right to left in FIG. 6.
Then, droplets of the liquid composition 12Aare ejected in the same manner as in FIG. 5 onto the base material 211, which is continuously conveyed, from the liquid ejection head 306 installed above the base material 211 between the feed roller 304 and the take-up roller 305.
Note that a plurality of liquid ejection heads 306 may be installed in a direction substantially parallel or substantially perpendicular to the conveying direction of the base material 211.
Next, the base material 211 onto which the droplets of the liquid composition 12A have been ejected are conveyed to a heating unit 309 by the feed roller 304 and the take-up roller 305.
As a result, an electrode mixture layer 212 is formed, and the electrode 210 having the electrode mixture layer on the base material is obtained.
Further, as in FIG. 7, the tank 307 may be a tank 307A to which the liquid composition is supplied from a tank 313A connected to the tank 307A, and the liquid ejection head 306 may include a plurality of liquid ejection heads 306A and 306B. In FIG. 7, reference numerals 310A and 310B represent pump units, reference numerals 313A and 313B represent primary tanks, and reference numerals 307A and 307B represent secondary tanks. The liquid composition is supplied from the primary tanks 313A and 313B to the secondary tanks 307A and 307B using valves 314A and 314B, respectively, and further supplied to the liquid ejection heads 306A and 306B via supply pipes 308A and 308B, respectively. Valves 311A, 311B, 312A, and 312B are openable and closable as needed.

[Embodiment in which electrode mixture layer is formed by indirectly applying liquid composition to base material]

FIG. 8 and FIG. 9 are configuration diagrams illustrating examples of printing units employing an inkjet method and a transfer method as the application means in the electrode production apparatus of the present embodiment. FIG. 8 is a configuration diagram illustrating a printing unit using a drum-shaped intermediate transfer body, and FIG. 9 is a configuration diagram illustrating a printing unit using an endless belt-like intermediate transfer body.
The printing unit 400' illustrated in FIG. 8 is an inkjet printer that forms a liquid composition layer or an electrode mixture layer on a base material by transferring the liquid composition or the electrode mixture layer to the base material via an intermediate transfer body 4001.
A printing unit 400' includes an inkjet section 420, a transfer drum 4000, a pretreatment section 4002, an absorption section 4003, a heating section 4004, and a cleaning section 4005.
The inkjet section 420 includes a head module 422 holding a plurality of heads 101.

The plurality of heads 101 eject the liquid composition onto the intermediate transfer body 4001 supported by the transfer drum 4000 to form a liquid composition layer on the intermediate transfer body 4001.

The plurality of heads 101 are line heads, and nozzles are arranged in a range covering the width of the recording area of the base material of the maximum size that can be used.

The plurality of heads 101 include nozzle surfaces in which the nozzles are formed on their lower surfaces, and the nozzle surfaces face a surface of the intermediate transfer body 4001 with a fine gap.

In the case of the present embodiment, the intermediate transfer body 4001 is configured to circulate on a circular orbit. Thus, the plurality of heads 101 are arranged radially.

The transfer drum 4000 facing an impression cylinder 621 forms a transfer nip portion.

The pretreatment section 4002 applies a reaction liquid for increasing the viscosity of the liquid composition, for example, onto the intermediate transfer body 4001 before the plurality of heads 101 eject the liquid composition.

The absorption section 4003 absorbs a liquid component from the liquid composition layer on the intermediate transfer body 4001 before transfer.

The heating section 4004 heats the liquid composition layer on the intermediate transfer body 4001 before transfer.

Heating the liquid composition layer further improves the viscosity of the liquid composition, thereby improving the transferability to the base material.

The cleaning section 4005 cleans the surface of the intermediate transfer body 4001 after transfer to remove a foreign substance such as ink and dust remaining on the intermediate transfer body 4001.

The outer peripheral surface of the impression cylinder 621 is in pressure contact with the intermediate transfer body 4001. When the base material passes through the transfer nip portion formed by the impression cylinder 621 and the intermediate transfer body 4001, a liquid composition layer or an electrode mixture layer on the intermediate transfer body 4001 is transferred to the base material.

Note that the impression cylinder 621 may include at least one gripping mechanism for holding a tip portion of the base material on an outer peripheral surface of the impression cylinder 621.

The printing unit 400" illustrated in FIG. 9 is an inkjet printer that forms a liquid composition layer or an electrode mixture layer on a base material by transferring the liquid composition or the electrode mixture layer to the base material via an intermediate transfer belt 4006.

The printing unit 400" ejects liquid composition droplets from the plurality of heads 101 provided in the inkjet section 420 to form a liquid composition layer on an outer peripheral surface of the intermediate transfer belt 4006.

The liquid composition layer formed on the intermediate transfer belt 4006 is heated by a heating section 4007 to increase the viscosity and form a film on the intermediate transfer belt 4006.

At the transfer nip portion where the intermediate transfer belt 4006 faces a transfer roller 622, the liquid composition layer or the electrode mixture layer formed into a film on the intermediate transfer belt 4006 is transferred to the base material.

The surface of the intermediate transfer belt 4006 after transfer is cleaned by a cleaning roller 4008.

The intermediate transfer belt 4006 is stretched over a drive roller 4009a, a counter roller 4009b, a plurality (four in this example) of shape maintaining rollers 4009c, 4009d, 4009e, and 4009f, and a plurality (four in this example) of support rollers 4009g, and is moved in an arrow direction in FIG. 9.

The support rollers 4009g disposed so as to face the plurality of heads 101 maintain a tension state of the intermediate transfer belt 4006 when ink droplets are ejected from the plurality of heads 101.

<Other means and other processes>

Other means are not particularly limited as long as other means do not impair the effects of the present disclosure and can be appropriately selected according to the purpose.

Other processes are not particularly limited as long as other processes do not impair the effects of the present disclosure and can be appropriately selected according to the purpose.

FIG. 10 to FIG. 13 are schematic diagrams illustrating examples of a formation pattern of the electrode mixture layer in the electrode production method. In FIG. 10 to FIG. 13, an X direction represents a direction perpendicular to a printing direction, and a Y direction represents the printing direction.

Patterning the electrode mixture layer in this manner can increase the surface area.

FIG. 10 is an illustration of the electrode mixture layer in which convex portions 13 and non-convex portions 14 are alternately formed in the X direction and are flat in the Y direction.

FIG. 11 is an illustration of the electrode mixture layer in which convex portions 15 and non-convex portions 16 are alternately formed in the Y direction and are flat in the X direction.

FIG. 12 is an illustration of the electrode mixture layer in which convex portions 17 and non-convex portions 18 are alternately formed in the X direction, and the convex portions 17 and the non-convex portions 18 are also alternately

formed in the Y direction. In these configurations, as compared with the structure illustrated in FIG. 10 and FIG. 11, a grid-like structure in which the convex portions and upper parts of the concave portions are alternately formed along the X direction and the Y direction as illustrated in FIG. 12 can further increase the surface area, making it possible to improve the performance of the electrochemical element.

FIG. 13A and FIG. 13B are illustrations of the electrode mixture layer in which the convex portions 17 and the non-convex portions 18 are alternately formed in the X direction, and the convex portions 17 and the non-convex portions 18 are also alternately formed in the Y direction, the convex portion 17 and the non-convex portion 18 being formed in a dot shape (substantially circular shape).

FIG. 13A is a plan view, while FIG. 13B is a side view.

Having such a dot shape can exhibit higher surface properties, making it possible to further improve the performance of the electrochemical element.

(Electrochemical element)

The electrochemical element of the present disclosure including the electrode of the present disclosure preferably includes an electrolyte, a separator, and an exterior. Note that the separator is not necessary when using a solid electrolyte or a gel electrolyte.

<Electrolyte>

As the electrolyte, an aqueous electrolytic solution or a non-aqueous electrolyte can be used.

-Aqueous electrolytic solution-

An aqueous electrolytic solution is an aqueous solution in which an electrolyte salt is dissolved in water. Examples of the electrolyte salt that can be used include, but are not limited to, sodium hydroxide, potassium hydroxide, sodium chloride, potassium chloride, ammonium chloride, zinc chloride, zinc acetate, zinc bromide, zinc iodide, zinc tartrate, and zinc perchloride.

-Non-aqueous electrolyte-

As a non-aqueous electrolyte, a non-aqueous electrolytic solution, or a solid electrolyte or a gel electrolyte can be used.

--Non-aqueous electrolytic solution--

The non-aqueous electrolytic solution is an electrolytic solution in which the electrolyte salt is dissolved in a non-aqueous solvent.

--Non-aqueous solvent--

The non-aqueous solvent is not particularly limited, and for example, an aprotic organic solvent is preferably used. As the aprotic organic solvent, a carbonate-based organic solvent such as a chain carbonate or a cyclic carbonate can be used. Among these carbonate-based organic solvents, a chain carbonate is preferable in terms of high dissolving ability for the electrolyte salt. Further, the aprotic organic solvent preferably has a low viscosity.

Examples of the chain carbonate include, but are not limited to, dimethyl carbonate (DMC), diethyl carbonate (DEC), and methyl ethyl carbonate (EMC).

The content of the chain carbonate in the non-aqueous solvent is preferably 50% by mass or more. In a case where the content of the chain carbonate in the non-aqueous solvent is 50% by mass or more, even if the non-aqueous solvent other than the chain carbonate is a cyclic substance with a high dielectric constant (e.g., a cyclic carbonate or a cyclic ester), the content of the cyclic substance is kept low. Thus, even if the non-aqueous electrolytic solution with a high concentration of 2M or more is produced, the viscosity of the non-aqueous electrolytic solution is kept low, and penetration of the non-aqueous electrolytic solution into the electrode and ion diffusion are improved.

Examples of the cyclic carbonate include, but are not limited to, propylene carbonate (PC), ethylene carbonate (EC), butylene carbonate (BC), and vinylene carbonate (VC).

Note that, examples of the non-aqueous solvent other than the carbonate-based organic solvent that can be used include, but are not limited to, an ester-based organic solvent such as a cyclic ester or a chain ester and an ether-based organic solvent such as a cyclic ether or a chain ether.

Examples of the cyclic ester include, but are not limited to, γ-butyrolactone (γBL), 2-methyl-γ-butyrolactone, acetyl-γ-butyrolactone, and γ-valerolactone.

Examples of the chain ester include, but are not limited to, a propionic acid alkyl ester, a malonic acid dialkyl ester, an acetic acid alkyl ester (e.g., methyl acetate (MA) and ethyl acetate), and a formic acid alkyl ester (e.g., methyl formate (MF) and ethyl formate).

Examples of the cyclic ether include, but are not limited to, tetrahydrofuran, an alkyltetrahydrofuran, an alkoxytetrahydrofuran, a dialkoxytetrahydrofuran, 1,3-dioxolane, an alkyl-1,3-dioxolane, and 1,4-dioxolane.

Examples of the chain ether include, but are not limited to, 1,2-dimethoxyethane (DME), diethyl ether, an ethylene glycol dialkyl ether, a diethylene glycol dialkyl ether, a triethylene glycol dialkyl ether, and a tetraethylene glycol dialkyl ether.

-Electrolyte salt-

The electrolyte salt is not particularly limited as long as the electrolyte salt has high ion conductivity and can be dissolved in the non-aqueous solvent.

The electrolyte salt preferably includes a halogen atom. Examples of a cation constituting the electrolyte salt include, but are not limited to, a lithium ion. Examples of an anion constituting the electrolyte salt include, but are not limited to, $BF_4^-$, $PF_6^-$, $AsF_6^-$, $CF_3SO_3^-$, $(CF_3SO_2)_2N^-$, and $(C_2F_5SO_2)_2N^-$.

The lithium salt is not particularly limited and can be appropriately selected according to the purpose. Examples of the lithium salt include, but are not limited to, lithium hexafluorophosphate ($LiPF_6$), lithium tetrafluoroborate ($LiBF_4$), lithium hexafluoroarsenate ($LiAsF_6$), lithium trifluoromethanesulfonate ($LiCF_3SO_3$), lithium bis(trifluoromethylsulfonyl)imide ($LiN(CF_3SO_2)_2$), and lithium bis(pentafuluoroethylsulfonyl)imide ($LiN(C_2F_5SO_2)_2$). Among these lithium salts, $LiPF_6$ is preferable in terms of ionic conductivity, and $LiBF_4$ is preferable in terms of stability.

Note that the electrolyte salt may be used singly or in combination of two or more.

The concentration of the electrolyte salt in the non-aqueous electrolytic solution can be appropriately selected according to the purpose. However, the concentration is preferably 1 mol/L to 2 mol/L in a case where the non-aqueous electrochemical element is a swing type, and preferably 2 mol/L to 4 mol/L in a case where the non-aqueous electrochemical element is a reserve type.

<Solid electrolyte>

There is no particular limitation to a material that constitutes the solid electrolyte, as long as the material is a solid material that exhibits an electronic insulation property and ionic conductivity. However, a sulfide solid electrolyte and an oxide solid electrolyte are preferable from the viewpoint of having high ionic conductivity. A sulfide solid electrolyte is more preferable because the sulfide solid electrolyte having high plasticity can form good interface between solid electrolyte particles or between the solid electrolyte and the active material.

Note that, in this specification, the phrase "exhibiting an electronic insulation property" means a state in which a short circuit does not occur when the positive electrode and the negative electrode are opposed to each other via the solid electrolyte layer, and the phrase "exhibiting ionic conductivity" means that only ions move when a potential difference is applied to the positive electrode and the negative electrode which are opposed to each other via the solid electrolyte layer.

The sulfide solid electrolyte can be broadly classified into, for example, a crystalline sulfide solid electrolyte and a glass-based solid electrolyte.

Examples of the crystalline sulfide solid electrolyte include, but are not limited to, $Li_{9.54}Si_{1.74}P_{1.44}S_{11.7}Cl_{0.3}$, $Li_{9.6}P_3S_{12}$, $Li_9P_3S_9O_3$, $Li_{9.81}Sn_{0.81}P_{2.19}S_{12}$, $Li_{9.42}Si_{1.02}P_{2.1}S_{9.96}O_{2.04}$, $Li_{10}Ge(P_{1-x}Sb_x)_2S_{12}$ ($0 \leqq x \leq 0.15$), $Li_{10}SnP_2S_{12}$, $Li_{10.35}[M1_{1-x}M2_x]_{1.35}P_{1.65}S_{12}$ (M1, M2=Si, Ge, Sn, As, or Sb, $0 \leq x \leq 0.15$), $Li_{11}Si_2PS_{12}$, $Li_{11}AlP_2S_{12}$, $Li_{3.45}Si_{0.45}P_{0.55}S_4$, $Li_6PS_5X$ (X=Cl, Br, I), $Li_5PS_4X_2$ (X=Cl, Br, I), $Li_{5.5}PS_{4.5}Cl_{1.5}$, $Li_{5.35}Ca_{0.1}PS_{4.5}Cl_{1.55}$, $Li_{6+x}M_xSb_{1-x}S_5I$ (M=Si, Ge, Sn, $0 \leq x \leq 1$), $Li_7P_2S_8I$, γ-$Li_3PS_4$, $Li_4MS_4$ (M=Ge, Sn, As), $Li_{4-x}Sn_{1-x}Sb_xS_4$ ($0 \leq x \leq 0.15$), $Li_{4-x}Ge_{1-x}P_xS_4$ ($0 \leq x \leq 0.15$), and $Li_{3+5x}P_{1-x}S_4$ ($0 \leq x \leq 0.3$). These materials may be used singly or in combination of two or more.

Examples of the glass-based sulfide solid electrolyte include, but are not limited to, $Li_2S$-$P_2S_5$, $Li_2S$-$P_2S_5$-LiI, $Li_2S$-$P_2S_5$-$P_2O_5$, $Li_2S$-$P_2S_5$-LiCl, $Li_2S$-$SiS_2$, $Li_2S$-$SiS_2$-$P_2S_5$, $Li_2S$-$SiS_2$-$Al_2S_3$, and $Li_2S$-$SiS_2$-$Li_xMO_y$ (M=Si, P, Ge). Further, $Li_7P_3S_{11}$ glass-ceramics in which a part of the glass-based sulfide solid electrolyte is crystallized can also be used. In these materials, a mixing ratio of each raw material of the glass-based sulfide solid electrolyte is not specified.

The oxide-based solid electrolyte can be broadly classified into a crystalline oxide solid electrolyte and a glass-based oxide solid electrolyte. Examples of the crystalline oxide solid electrolyte include, but are not limited to, $Li_{1+x}M_xTi_{2-x}(PO_4)_3$ (M=Al, Cr, Ga, Fe, Sc, In, Lu, Y, La, $0 \leq x \leq 0.5$), $La_xLi_yTiO_3$($0.3 \leq x \leq 0.7$, $0.3 \leq y \leq 0.7$), and $Li_{7-x}La_3Zr_{2-x}M_xO_{12}$ (M=Nb, Ta, $0 \leq x \leq 1$).

Examples of the glass-based solid electrolyte include, but are not limited to, $Li_4SiO_4$-$Li_2BO_3$, $Li_3BO_3$-$Li_2SO_4$,

$Li_2O-B_2O_3-P_2O_5$, and $Li_2O-SiO_2$.

Other than the solid electrolytes described above, there is no particular limitation to the solid electrolytes as long as the solid electrolytes do not deviate from the gist of the disclosure. Further, these solid electrolytes may be used singly or in combination of two or more.

Examples of an electrolyte material suitable to be dissolved or dispersed in a liquid for constituting these solid electrolyte layers include, but are not limited to, a material that is a precursor of the solid electrolyte, such as $Li_2S$ and $P_2S_5$, or LiCl, and a material for the solid electrolyte, such as $Li_2S-P_2S_5$ glass or $Li_7P_3S_{11}$ glass ceramics.

As the solid electrolyte, the solid electrolyte prepared by a known method may be used, or a commercially available solid electrolyte may be used.

<Gel electrolyte>

The gel electrolyte is not particularly limited as long as the gel electrolyte exhibits ionic conductivity and can be appropriately selected according to the purpose. Examples of a polymer constituting a net-like structure of the gel electrolyte include, but are not limited to, polyethylene oxide, polypropylene oxide, polyacrylonitrile, polymethyl methacrylate, polyvinyl chloride, a copolymer of vinylidene fluoride and propylene hexafluoride, and polyethylene carbonate. These materials may be used singly or in combination of two or more.

Further, as a solvent molecule to be retained, an ionic liquid can be mentioned. Examples of the ionic liquid include, but are not limited to, 1-methyl-1-propylpyrrolidinium bis(fluorosulfonylimide), 1-butyl-1-methylpyrrolidinium bis(fluorosulfonylimide), 1-methyl-1-propylpiperidinium bis(fluorosulfonylimide), 1-ethyl-3-methylimidazolium bis(fluorosulfonylimide), 1-methyl-3-propylimidazolium bis(fluorosulfonylimide), and N,N-diethyl-N-methyl-N-(2-methoxyethyl)ammonium bis(fluorosulfonyl)imide.

These materials may be used singly or in combination of two or more.

Further, a mixture obtained by mixing a liquid such as tetraglyme, propylene carbonate, fluoroethylene carbonate, ethylene carbonate, or diethyl carbonate, and a lithium salt may be used.

The lithium salt is not particularly limited and can be appropriately selected according to the purpose. Examples of the lithium salt include, but are not limited to, lithium hexafluorophosphate ($LiPF_6$), lithium tetrafluoroborate ($LiBF_4$), lithium hexafluoroarsenate ($LiAsF_6$), lithium trifluoromethanesulfonate ($LiCF_3SO_3$), lithium bis(trifluoromethylsulfonyl)imide ($LiN(CF_3SO_2)_2$), and lithium bis(pentafuluoroethylsulfonyl)imide ($LiN(C_2F_5SO_2)_2$). These materials may be used singly or in combination of two or more.

Any material other than the above-mentioned materials can be appropriately used as long as the material does not deviate from the gist of the disclosure. Further, the gel electrolytes may be used singly or in combination of two or more.

As an electrolyte material to be dissolved or dispersed in a liquid for constituting these gel electrolytes, the above-mentioned polymer compound and the ionic liquid or the solution in which the lithium salt is dissolved may be used. Further, a precursor material for the gel electrolyte, such as, for example, polyethylene oxide or polypropylene oxide with acrylate groups on both terminals may be used in combination with the ionic liquid or the solution in which the lithium salt is dissolved.

<Separator>

A separator is disposed between the negative electrode and the positive electrode as needed in order to prevent a short circuit between the negative electrode and the positive electrode.

Examples of the separator include, but are not limited to, paper such as kraft paper, vinylon mixed paper, or synthetic pulp mixed paper, cellophane, a polyethylene graft film, polyolefin non-woven fabric such as polypropylene melt-blown non-woven fabric, polyamide non-woven fabric, glass fiber non-woven fabric, and a micropore film. These materials may be used singly or in combination of two or more.

The size of the separator is not particularly limited as long as the separator can be used in the electrochemical element. The separator may have a single-layer structure or a laminated structure.

Note that the separator is required in a case where the aqueous electrolytic solution or the non-aqueous electrolytic solution is used as the electrolyte. However, in a case where the solid electrolyte or the gel electrolyte is used, the solid electrolyte or the gel electrolyte can be used as the separator.

<Exterior>

There is no particular limitation to an exterior as long as the exterior can seal the electrode, the electrolyte, the separator, or the solid electrolyte or the gel electrolyte.

The shape of the electrochemical element is not particularly limited. Examples of the shape include, but are not limited to, a laminate type, a cylinder type in which a sheet electrode and a separator are spirally formed, a cylinder

type with an inside-out structure in which a pellet electrode and a separator are combined, and a coin type in which a pellet electrode and a separator are laminated.

(Electrochemical element production method and electrochemical element production apparatus)

A method for producing an electrochemical element of the present disclosure includes an electrode production process of producing an electrode by the above-mentioned electrode production method of the present disclosure and an element forming process of producing an electrochemical element using the electrode, and, if necessary, further includes other processes.
An apparatus for producing an electrochemical element of the present disclosure includes an electrode production unit of producing an electrode by the above-mentioned electrode production apparatus of the present disclosure and an element forming unit of producing an electrochemical element using the electrode, and, if necessary, further includes other means.

<Electrode production process and electrode production unit>

The above-mentioned electrode production process includes the application process described in the above-mentioned electrode production method of the present disclosure and, if necessary, further includes other means such as an electrode processing process.
The electrode production unit includes the storage container and the application means described in the above-mentioned electrode production apparatus of the present disclosure and, if necessary, further includes other means such as an electrode processing means.
The above-mentioned electrode production process and the above-mentioned electrode production unit make it possible to produce an electrode including an electrode base material and an electrode mixture layer on the electrode base material.

<Element forming process and element forming unit>

The above-mentioned element forming process is a process of producing an electrochemical element using the above-mentioned electrode.
The above-mentioned element forming unit is a means for producing an electrochemical element using the above-mentioned electrode.
A method for producing an electrochemical element using the electrode is not particularly limited, and a known method for producing an electrochemical element can be appropriately selected according to the purpose. Examples of the method include, but are not limited to, a method in which an electrochemical element is formed by performing at least one of installing, winding or stacking, or housing a counter electrode in a container.
Note that the element forming process does not necessarily include the entire element formation process but may only include a part of the element formation process.

<Electrode processing process and electrode processing unit>

An electrode processing unit is a means for processing the electrode on which the electrode mixture layer is formed downstream of the application unit.
The electrode processing unit may perform at least one of cutting, folding, or bonding.
The electrode processing unit can, for example, cut the electrode on which the electrode mixture layer is formed to produce a laminate of electrodes.
The electrode processing unit can wind or stack the electrode on which the electrode mixture layer is formed.
The electrode processing unit includes, for example, an electrode processing section, and performs cutting, folding, stacking, or winding of the electrode on which the electrode mixture layer is formed according to a desired battery form.
An electrode processing process performed by the electrode processing unit is, for example, a process of processing the electrode on which the electrode mixture layer is formed downstream of the application process.
The electrode processing process may include at least one of a cutting process, a folding process, or a bonding process.

<Usage of electrochemical element>

There is no particular limitation to usage of the electrochemical element. Examples of the usage include, but

are not limited to, a moving object such as a vehicle; and an electric device such as a smartphone, a laptop computer, a pen-input personal computer, a mobile personal computer, an e-book reader, a cell phone, a portable fax machine, a portable copying machine, a portable printer, a stereo headphone, a video player, a liquid crystal television, a handheld vacuum cleaner, a portable CD player, a MiniDisc player, a transceiver, an electronic diary, a calculator, a memory card, a portable tape recorder, a radio, a backup power supply, a motor, a lighting device, a toy, a game console, a clock/watch, an electronic flash, or a camera. Among these products, a vehicle and an electrical device are particularly preferable.

Examples of the moving object include, but are not limited to, an ordinary automobile, a large-sized special automobile, a small-sized special automobile, a truck, a large-sized motorcycle, and an ordinary motorcycle.

[Moving object]

FIG. 14 is a diagram illustrating a moving object equipped with an all-solid-state battery as an electrochemical element of the present disclosure.

A moving object 50 is, for example, an electric vehicle.

The moving object 50 includes a motor 51, an electrochemical element 52, and wheels 53 as an example of a moving means.

The electrochemical element 52 is the above-mentioned electrochemical element of the present disclosure.

The electrochemical element 52 drives the motor 51 by supplying electric power to the motor 51.

The motor 51 thus driven can drive the wheels 53 and, as a result, the moving object 50 can move.

According to the above-mentioned configuration, short-circuiting between the positive electrode and the negative electrode is prevented, and the moving object is driven by electric power from the electrochemical element excellent in battery characteristics, allowing the moving object to move safely and efficiently.

The moving object 50 is not limited to an electric vehicle and may be a PHEV, an HEV, a locomotive that can run using both a diesel engine and the electrochemical element, or a motorcycle.

In addition, the moving object may be a carrier robot used in a factory or the like, which can move by using only the electrochemical element or by using both an engine and the electrochemical element.

Further, the moving object may be the one that does not move as a whole, but only a part of which moves. For example, the moving object may be an assembly robot that can move an arm or the like by using only the electrochemical element or both an engine and the electrochemical element, which is installed on the production line of a factory.

EXAMPLES

Examples of the present disclosure will be described below. However, the present disclosure is not limited to these examples.

In the following Examples and Comparative examples, the "mode diameter of the active material", the "viscosity of the liquid composition", and the "height h1 of the non-convex portion, the height h2 of the convex portion, and the distance a1 between the vertices of the convex portion and the non-convex portion adjacent to each other" were measured by the following method.

<Mode diameter of active material>

The particle size distribution of the active material in the obtained liquid composition was measured at room temperature (25°C) using a laser diffraction particle size distribution analyzer Mastersizer 3000 (manufactured by Malvern Panalytical Ltd.). In the measured particle size distribution of the active material in the liquid composition described above, the diameter having the maximum value of the distribution was calculated as the mode diameter.

<Viscosity of liquid composition>

The viscosity of the obtained liquid composition at 100 rpm was measured at room temperature (25°C) using a model TV25 viscometer (cone & plate viscometer, manufactured by Toki Sangyo).

<Measurement of height h1 of non-convex portion, height h2 of convex portion, and distance a1 between vertices of convex portion and non-convex portion adjacent to each other>

By measuring a surface profile with a laser microscope (manufactured by Keyence Corp.), the height h1 to the lowest point of the non-convex portion and the height h2 to the highest point of the convex portion from the current collector foil used as a reference plane, and the distance a1 between the vertices of the convex portion and the non-convex portion adjacent to each other were measured, thereby calculating h3=h2-h1, the ratio (h1/h2), and the ratio (h3/a1).

(Preparation Example 1)

-Preparation of liquid composition A1-

The unit "% by mass" used for each substance included in a liquid composition A1 indicates "% by mass" relative to the liquid composition. Note that "% by mass" of a dispersion medium is a value obtained by subtracting "% by mass" of each component from 100% by mass.

In ethyl lactate to which a dispersant (SC-0708A, manufactured by NOF Corp., 0.5% by mass) was added, a nickel-based positive electrode active material (NCA, 50% by mass) (manufactured by JFE Mineral & Alloy Co., Ltd.) was pulverized and crushed using a bead mill, thereby dispersing the nickel-based positive electrode active material in ethyl lactate. Carbon black (1.5% by mass) (manufactured by Denka Company Ltd.) and a polyamide-imide compound (PAI, 1.5% by mass) represented by the following general formula 1 were further mixed to obtain a liquid composition A1.

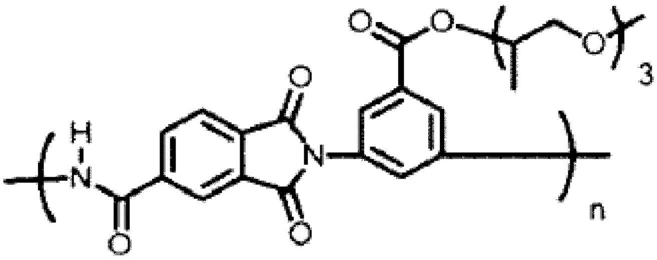

... general formula 1

The obtained liquid composition A1 had the mode diameter of the active material of 9.72 μm and the viscosity at 25°C of 10.7 mPa·s.

(Preparation Example 2)

-Preparation of liquid composition F1-

The unit "% by mass" used for each substance included in a liquid composition F1 indicates "% by mass" relative to the liquid composition. Note that "% by mass" of a dispersion medium is a value obtained by subtracting "% by mass" of each component from 100% by mass.

In ethyl lactate to which a dispersant (SC-0708A, manufactured by NOF Corp., 0.5% by mass) was added, lithium titanate (LTO, 50% by mass) (manufactured by Ishihara Sangyo Kaisha, Ltd.) was pulverized and crushed using the bead mill, thereby dispersing lithium titanate in ethyl lactate. Carbon black (1.5% by mass) (manufactured by Denka Company Ltd.) and the polyamide-imide compound (PAI, 1.5% by mass) represented by the above general formula 1 were further mixed to obtain a liquid composition F1.

The obtained liquid composition F1 had the mode diameter of the active material of 3.22 μm and the viscosity at 25°C of 11.3 mPa s.

(Reference example 1)

<Production of positive electrode>

The liquid composition A1 described above was applied on a stage heated to 80°C using an inkjet device (device name: EV2500, manufactured by Ricoh Co., Ltd.) to form a positive electrode mixture layer having a plurality of convex portions in which the distance a1 between the vertices of the convex portion and the non-convex portion adjacent to each other was 100 μm, and h3(i.e., h2-h1) obtained by subtracting the height h1 of the non-convex portions from the height h2 of the convex portions was 100 μm. The positive electrode mixture layer was further heated to 120°C and dried with a hot plate, and then pressed with a 7t hydraulic roll press (manufactured by Thank Metal) to obtain a positive electrode.

The obtained positive electrode included a plurality of convex portions on its surface in a cross section in the thickness direction viewed from the X direction perpendicular to the thickness direction. The positive electrode included a non-convex portion between a first convex portion and a second convex portion adjacent to each other among the plurality of convex portions. In the positive electrode, the height h1 of the non-convex portion was 50 μm, the height h2 of the convex portion was 150 μm, the distance a1 between the vertices of the convex portion and the non-convex portion adjacent to each other was 100 μm, h3=h2-h1 was 100 μm, the ratio (h1/h2) was 0.33, and the ratio (h3/a1)

was 1. These results are shown in Table 1. Further, on the surface of the obtained positive electrode, in the cross section in the thickness direction viewed from the X direction perpendicular to the thickness direction, a line corresponding to a surface of the non-convex portion positioned between the first convex portion and the second convex portion adjacent to each other among the plurality of convex portions, and a line corresponding to a surface of the first convex portion were curved.

Next, for the obtained positive electrode of Reference example 1, a capacity retention rate of the positive electrode was measured as follows. The result is shown in Table 1.

<Capacity retention rate of positive electrode>

The capacity retention rate of the positive electrode was measured using a charge-discharge test system (TOSCAT 3001, manufactured by Toyo System Co., Ltd.).

After punching the positive electrode thus produced into a round shape with a diameter of 16 mm, the positive electrode, a glass separator D with a thickness of 100 μm (manufactured by Advantec), the liquid composition A1, and a lithium foil with a thickness of 200 μm (manufactured by Honjo Metal Co., Ltd.) as a counter electrode were placed in a coin can, thereby producing an electrochemical element.

The electrochemical element thus produced was subjected to constant current charge to 4.2 V at 2.0 C at room temperature (25°C) and then to constant current discharge to 3.0 V to perform a cycle charge/discharge test. Note that, at the first cycle, an initial discharge capacity was measured as a discharge capacity A per unit area of the positive electrode under a charge/discharge condition in which the constant current charge was performed to 4.2 V at 0.2 C and then the constant current discharge was performed to 3.0 V Further, a discharge capacity at 500th cycle was measured as a discharge capacity B per unit area of the positive electrode under a charge/discharge condition in which, after repeating the charge/discharge cycle 500 times, the constant current charge was performed to 4.2 V at 0.2 C and then the constant current discharge was performed to 3.0 V

The capacity retention rate of the positive electrode was calculated by the following numerical formula (1) and evaluated according to the following criteria.

$$\text{Capacity retention rate (\%)} = (\text{discharge capacity B}/\text{discharge capacity A}) \times 100 \cdots \text{numerical formula (1)}$$

[Evaluation criteria]

Excellent: capacity retention rate of 60% or more
Good: capacity retention rate of 50% or more and less than 60%
Fair: capacity retention rate of 30% or more and less than 50%
Poor: capacity retention rate of less than 30%

(Comparative example 1)

<Production of positive electrode>

The liquid composition A1 described above was applied onto a 15 μm-thick aluminum foil current collector using a die coater (auto film applicator, manufactured by Tester Sangyo Co,. Ltd.), heated to 120°C and dried with a hot plate, and then pressed with a 7t hydraulic roll press (manufactured by Thank Metal) to form a flat positive electrode mixture layer (h1=h2) having a thickness of 100 μm.

Next, the capacity retention rate of the obtained positive electrode of Comparative example 1 was measured in the same manner as in Reference example 1. The result is shown in Table 1.

Table 1

| | Height h1 of non-convex portion ($\mu$m) | Height h2 of convex portion ($\mu$m) | h2-h1=h3 ($\mu$m) | a1 ($\mu$m) | Ratio (h1/h2) | Ratio (h3/a1) | Evaluation of capacity retention rate |
|---|---|---|---|---|---|---|---|
| Reference example 1 | 50 | 150 | 100 | 100 | 0.33 | 1 | Good |
| Comparative example 1 | 100 | 100 | 0 | - | 1 | - | Poor |

From the results in Table 1, it is found that Reference Example 1, in which the electrode mixture layer includes the plurality of convex portions in the cross section in the thickness direction viewed from the X direction perpendicular to the thickness direction, has better capacity retention ratio than Comparative example 1, in which the electrode mixture layer does not include the plurality of convex portions in the cross section in the thickness direction viewed from the X direction perpendicular to the thickness direction.

(Example 1)

<Production of negative electrode>

The liquid composition F1 described above was applied on a stage heated to 80°C using the inkjet device (device name: EV2500, manufactured by Ricoh Co., Ltd.) to form a negative electrode mixture layer including a plurality of convex portions in which the distance a1 between the vertices of the convex portion and the non-convex portion adjacent to each other was 100 $\mu$m, and h3(i.e., h2-h1) obtained by subtracting the height h1 of the non-convex portion from the height h2 of the convex portion was 10 $\mu$m. The negative electrode mixture layer was further heated to 120°C and dried with a hot plate, and further pressed with the 7t hydraulic roll press (manufactured by Thank Metal) to obtain a negative electrode.

The obtained negative electrode included a plurality of convex portions on its surface in a cross section in the thickness direction viewed from the Y direction perpendicular to the thickness direction. The negative electrode included a non-convex portion between a first convex portion and a second convex portion adjacent to each other among the plurality of convex portions. In the negative electrode, the height h1 of the non-convex portion was 23.2 $\mu$m, the height h2 of the convex portion was 33.0 $\mu$m, the distance a1 between the vertices of the convex portion and the non-convex portion adjacent to each other was 100.6 $\mu$m, h3=h2-h1 was 9.8 $\mu$m, the ratio (h1/h2) was 0.70, and the ratio (h3/a1) was 0.097. These results are shown in Table 2. Further, on the surface of the obtained negative electrode, in the cross section in the thickness direction viewed from the Y direction perpendicular to the thickness direction, a line corresponding to a surface of the non-convex portion positioned between the first convex portion and the second convex portion adjacent to each other among the plurality of convex portions, and a line corresponding to a surface of the first convex portion were curved.

Next, for the obtained negative electrode of Example 1, the "porosity d2 of the convex portion and the porosity d1 of the non-convex portion" and the capacity retention rate of the negative electrode were measured as follows. The results are shown in Table 2.

<Porosity d2 of convex portion and porosity d1 of non-convex portion>

A main component of a model 53 embedding epoxy resin (Lot No.53512040149, manufactured by Sankei Co., Ltd.) and a curing agent (Lot No.53572040342, manufactured by Sankei Co., Ltd.) were well mixed at a volume ratio of 1:2, and the electrode mixture layer was embedded with the resin using a vacuum impregnation device (Buehler vacuum impregnation equipment I, manufactured by Sankei Co., Ltd.), followed by curing for 24 hours. The electrode mixture layer embedded in the epoxy resin was processed with a cross-section polisher (manufactured by JEOL Ltd.), and a cross section was observed with a desktop scanning electron microscope SEM (Phenom Prox, manufactured by Jusco International Co., Ltd.) to take an SEM image of the electrode mixture layer.

Further, the SEM image of the electrode mixture layer thus obtained was binarized using image processing software (Image-Pro Premier version 9.2 64-bit, manufactured by Hakuto Co., Ltd.) to obtain the area of regions derived from particles and the area of regions derived from voids in the entire convex portion or in the non-convex portion. Then, the porosity d2 of the convex portion and the porosity d1 of the non-convex portion were obtained by dividing the area of the voids by the area of the entire convex portion and the area of the entire non-convex portion, respectively. The ratio (d1/d2) was then calculated and evaluated according to the following criteria.

[Evaluation criteria]

Good: porosity ratio (d1/d2) of 0.82 or more and 1.22 or less
Poor: Porosity ratio (d1/d2) of less than 0.82 or more than 1.22

<Capacity retention rate of negative electrode>

The capacity retention rate of the electrode was measured using a charge-discharge test system (TOSCAT 3001, manufactured by Toyo System Co., Ltd.).

After punching the negative electrode thus produced into a round shape with a diameter of 16 mm, the negative electrode, a glass separator D with a thickness of 100 μm (manufactured by Advantec), the liquid composition F1, and lithium titanate with a thickness of 200 μm (manufactured by Honjo Metal Co., Ltd.) as a counter electrode were placed in a coin can, thereby obtaining an electrochemical element.

This electrochemical element was charged and discharged in a range of 1.0 V to 2.0 V at 2.0 C at room temperature (25°C), and then discharged to 3.0 V at a constant current, thereby performing a cycle charge/discharge test.

Note that, at the first cycle, an initial capacity was measured as a discharge capacity A per unit area of the negative electrode under a charge/discharge condition in which the charge/discharge was performed in a range of 1.0 V to 2.0 V at 0.2 C and then the constant current discharge was performed to 3.0 V

Further, a discharge capacity at 500th cycle was measured as a discharge capacity B per unit area of the negative electrode under a charge/discharge condition in which, after repeating the charge/discharge cycle 500 times, the charge/discharge was performed in a range of 1.0 V to 2.0 V at 0.2 C and then the constant current discharge was performed to 3.0 V

The capacity retention rate of the negative electrode was calculated by the following numerical formula (2) and evaluated according to the following criteria.

$$\text{Capacity retention rate (\%)} = (\text{discharge capacity B}/\text{discharge capacity A}) \times 100 \cdots \text{numerical formula (2)}$$

[Evaluation criteria]

Excellent: capacity retention rate of 60% or more
Good: capacity retention rate of 50% or more and less than 60%
Fair: capacity retention rate of 30% or more and less than 50%
Poor: capacity retention rate of less than 30%

(Comparative example 2)

<Production of negative electrode>

The liquid composition F1 described above was applied onto a 20 μm-thick copper foil current collector using a die coater (auto film applicator, manufactured by Tester Sangyo Co,. Ltd.), and heated to 120°C and dried with a hot plate. The negative electrode thus formed was pressed with a mold having a concavo-convex shape using a pressing device to form a negative electrode mixture layer having the concavo-convex shape. In this process, the mold is a roll-shaped mold as illustrated in FIG. 15, and the mold has, on its surface, a plurality of cup-shaped concave portions with a diameter of 100 μm and a height of 10 μm, which are recessed from the surroundings and arranged at intervals of 100 μm.

The obtained negative electrode included a plurality of convex portions on its surface in a cross section in the thickness direction viewed from the Y direction perpendicular to the thickness direction. The negative electrode included a non-convex portion between a first convex portion and a second convex portion adjacent to each other among the plurality of convex portions. In the negative electrode, the height h1 of the non-convex portion was 24.1 μm, the height h2 of the convex portion was 33.1 μm, the distance a1 between the vertices of the convex portion and the non-convex portion adjacent to each other was 103.8 μm, h3=h2-h1 was 9.0 μm, the ratio (h1/h2) was 0.73, and the ratio (h3/a1)

was 0.087. These results are shown in Table 2. Further, on the surface of the obtained negative electrode, in the cross section in the thickness direction viewed from the Y direction orthogonal to the thickness direction, a line corresponding to a surface of the non-convex portion positioned between the first convex portion and the second convex portion adjacent to each other among the plurality of convex portions, and a line corresponding to a surface of the first convex portion were linear.

Next, for the obtained negative electrode of Comparative example 2, the "porosity d2 of the convex portion and the porosity d1 of the non-convex portion" and the capacity retention rate of the negative electrode were measured in the same manner as in Example 1. The results are shown in Table 2.

(Example 2)

<Production of positive electrode>

By using the inkjet device (device name: EV2500, manufactured by Ricoh Co., Ltd.), on a stage heated to 80°C, a positive electrode mixture layer including a plurality of convex portions in which the distance a1 between the vertices of the convex portion and the non-convex portion adjacent to each other was 125 μm, and h3 (i.e., h2-h1) obtained by subtracting the height h1 of the non-convex portion from the height h2 of the convex portion was 8 μm was formed on the 15 μm-thick aluminum foil current collector applied with the above-mentioned liquid composition A1. The positive electrode mixture layer was further heated to 120°C and dried with a hot plate and then pressed with the 7t hydraulic roll press (manufactured by Thank Metal) to obtain a positive electrode.

The obtained positive electrode included a plurality of convex portions on its surface in a cross section in the thickness direction viewed from the X direction perpendicular to the thickness direction. The positive electrode included a non-convex portion between a first convex portion and a second convex portion adjacent to each other among the plurality of convex portions. In the positive electrode, the height h1 of the non-convex portion was 22.1 μm, the height h2 of the convex portion was 29.7 μm, the distance a1 between the vertices of the convex portion and the non-convex portion adjacent to each other was 124.2 μm, h3=h2-h1 was 7.6 μm, the ratio (h1/h2) was 0.74, and the ratio (h3/a1) was 0.061. These results are shown in Table 2. Further, on the surface of the obtained positive electrode, in the cross section in the thickness direction viewed from the X direction perpendicular to the thickness direction, a line corresponding to a surface of the non-convex portion positioned between the first convex portion and the second convex portion adjacent to each other among the plurality of convex portions, and a line corresponding to a surface of the first convex portion were curved.

Next, for the obtained positive electrode of Example 2, the "porosity d2 of the convex portion and the porosity d1 of the non-convex portion" were measured in the same manner as in Example 1, and the capacity retention rate of the positive electrode was measured in the same manner as in Reference example 1. The results are shown in Table 2.

(Example 3)

<Production of positive electrode>

By using the inkjet device (device name: EV2500, manufactured by Ricoh Co., Ltd.), on a stage heated to 80°C, a positive electrode mixture layer including a plurality of convex portions in which the distance a1 between the vertices of the convex portion and the non-convex portion adjacent to each other was 1,000 μm, and h3(h2-h1) obtained by subtracting the height h1 of the non-convex portion from the height h2 of the convex portion was 50 μm was formed on the 15 μm-thick aluminum foil current collector applied with the above-mentioned liquid composition A1. The positive electrode mixture layer was further heated to 120°C and dried with a hot plate, and then pressed with the 7t hydraulic roll press (manufactured by Thank Metal) to obtain a positive electrode.

The obtained positive electrode included a plurality of convex portions on its surface in a cross section in the thickness direction viewed from the X direction perpendicular to the thickness direction. The positive electrode included a non-convex portion between a first convex portion and a second convex portion adjacent to each other among the plurality of convex portions. In the positive electrode, the distance a1 between the vertices of the convex portion and the non-convex portion adjacent to each other was 1,010.5 μm and the ratio (h3/a1) was 0.0045. Further, the height h1 of the non-convex portion was 98.2 μm, the height h2 of the convex portion h2 was 144.0 μm, h3=h2-h1 was 45.8 μm, and the ratio (h1/h2) was 0.68. These results are shown in Table 2. Further, on the surface of the obtained positive electrode, in the cross section in the thickness direction viewed from the X direction perpendicular to the thickness direction, a line corresponding to a surface of the non-convex portion positioned between the first convex portion and the second convex portion adjacent to each other among the plurality of convex portions, and a line corresponding to a surface of the first convex portion were curved.

Next, for the obtained positive electrode of Example 3, the "porosity d2 of the convex portion and the porosity

d1 of the non-convex portion" were measured in the same manner as in Example 1, and the capacity retention rate of the positive electrode was measured in the same manner as in Reference example 1. The results are shown in Table 2.

(Comparative Example 3)

<Production of positive electrode>

The above-mentioned liquid composition A1 was applied onto a 15 μm-thick aluminum foil current collector using a die coater (auto film applicator, manufactured by Tester Sangyo Co,. Ltd.) and heated to 120°C and dried with a hot plate.

Further, by using the inkjet device (device name: EV2500, manufactured by Ricoh Co., Ltd.), on a stage heated to 80°C, a positive electrode mixture layer including a plurality of convex portions in which the distance a1 between the vertices of the convex portion and the non-convex portion adjacent to each other was 100 μm, and h3 (i.e., h2-h1) obtained by subtracting the height h1 of the non-convex portion from the height h2 of the convex portion was 100 μm was formed on the positive electrode, which was formed by the above-mentioned die coating using the above-mentioned liquid composition A1. The positive electrode mixture layer was further heated to 120°C and dried with a hot plate and then pressed with the 7t hydraulic roll press (manufactured by Thank Metal) to obtain a positive electrode.

The obtained positive electrode included a plurality of convex portions on its surface in a cross section in the thickness direction viewed from the X direction perpendicular to the thickness direction. The positive electrode included a non-convex portion between a first convex portion and a second convex portion adjacent to each other among the plurality of convex portions. In the positive electrode, the distance a1 between the vertices of the convex portion and the non-convex portion adjacent to each other was 101.6 μm and the ratio (h3/a1) was 1.017.

Further, the height h1 of the non-convex portion was 99.8 μm, the height h2 of the convex portion was 203.1 μm, h3=h2-h1 was 103.3 μm, and the ratio (h1/h2) was 0.49.

These results are shown in Table 2.

Further, on the surface of the obtained positive electrode, in the cross section in the thickness direction viewed from the Y direction perpendicular to the thickness direction, a line corresponding to a surface of the non-convex portion positioned between the first convex portion and the second convex portion adjacent to each other among the plurality of convex portions, and a line corresponding to a surface of the first convex portion were curved.

Next, for the obtained positive electrode of Comparative example 3, the "porosity d2 of the convex portion and the porosity d1 of the non-convex portion" were measured in the same manner as in Example 1, and the capacity retention rate of the positive electrode was measured in the same manner as in Reference example.

The results are shown in Table 2.

(Example 4)

<Production of positive electrode>

By using the inkjet device (device name: EV2500, manufactured by Ricoh Co., Ltd.), on a stage heated to 80°C, a positive electrode mixture layer including a plurality of convex portions in which the distance a1 between the vertices of the convex portion and the non-convex portion adjacent to each other was 1,200 μm, and h3=h2-h1 obtained by subtracting the height h1 of the non-convex portion from the height h2 of the convex portion was 10 μm was formed on the 15 μm-thick aluminum foil current collector applied with the above-mentioned liquid composition A1. The positive electrode mixture layer was further heated to 120°C and dried with a hot plate and then pressed with the 7t hydraulic roll press (manufactured by Thank Metal) to obtain a positive electrode.

The obtained positive electrode included a plurality of convex portions on its surface in a cross section in the thickness direction viewed from the X direction perpendicular to the thickness direction. The positive electrode included a non-convex portion between a first convex portion and a second convex portion adjacent to each other among the plurality of convex portions. In the positive electrode, the distance a1 between the vertices of the convex portion and the non-convex portion adjacent to each other was 1,266.3 μm and the ratio (h3/a1) was 0.008.

Further, the height h1 of the non-convex portion was 138.7 μm, the height h2 of the convex portion was 152.5 μm, h3=h2-h1 was 9.7 μm, and the ratio (h1/h2) was 0.91.

These results are shown in Table 2.

Further, on the surface of the obtained positive electrode, in the cross section in the thickness direction viewed from the X direction perpendicular to the thickness direction, a line corresponding to a surface of the non-convex portion positioned between the first convex portion and the second convex portion adjacent to each other among the plurality of convex portions, and a line corresponding to a surface of the first convex portion were curved.

Next, for the obtained positive electrode of Example 4, the "porosity d2 of the convex portion and the porosity

d1 of the non-convex portion" were measured in the same manner as in Example 1, and the capacity retention rate of the positive electrode was measured in the same manner as in Reference example 1.

The results are shown in Table 2.

(Example 5)

<Production of positive electrode>

By using the inkjet device (device name: EV2500, manufactured by Ricoh Co., Ltd.), on a stage heated to 80°C, a positive electrode mixture layer including a plurality of convex portions in which the distance a1 between the vertices of the convex portion and the non-convex portion adjacent to each other was 650 μm, and h3=h2-h1 obtained by subtracting the height h1 of the non-convex portion from the height h2 of the convex portion was 10 μm was formed on the 15 μm-thick aluminum foil current collector applied with the above-mentioned liquid composition A1. The positive electrode mixture layer was further heated to 120°C and dried with a hot plate and then pressed with the 7t hydraulic roll press (manufactured by Thank Metal) to obtain a positive electrode.

The obtained positive electrode included a plurality of convex portions on its surface in a cross section in the thickness direction viewed from the X direction perpendicular to the thickness direction. The positive electrode included a non-convex portion between a first convex portion and a second convex portion adjacent to each other among the plurality of convex portions. In the positive electrode, the distance a1 between the vertices of the convex portion and the non-convex portion adjacent to each other was 635.3 μm and the ratio (h3/a1) was 0.016.

Further, the height h1 of the non-convex portion was 177.5 μm, the height h2 of the convex portion was 187.6 μm, h3=h2-h1 was 10.1 μm, and the ratio (h1/h2) was 0.95.

These results are shown in Table 2.

Further, on the surface of the obtained positive electrode, in the cross section in the thickness direction viewed from the X direction perpendicular to the thickness direction, a line corresponding to a surface of the non-convex portion positioned between the first convex portion and the second convex portion adjacent to each other among the plurality of convex portions, and a line corresponding to a surface of the first convex portion were curved.

Next, for the obtained positive electrode of Example 5, the "porosity d2 of the convex portion and the porosity d1 of the non-convex portion" were measured in the same manner as in Example 1, and the capacity retention rate of the positive electrode was measured in the same manner as in Reference example 1.

The results are shown in Table 2.

(Example 6)

<Production of positive electrode>

By using the inkjet device (device name: EV2500, manufactured by Ricoh Co., Ltd.), on a stage heated to 80°C, a positive electrode mixture layer including a plurality of convex portions in which the distance a1 between the vertices of the convex portion and the non-convex portion adjacent to each other was 2,500 μm, and h3=h2-h1 obtained by subtracting the height h1 of the non-convex portion from the height h2 of the convex portion was 15 μm was formed on the 15 μm-thick aluminum foil current collector applied with the above-mentioned liquid composition A1. The positive electrode mixture layer was further heated to 120°C and dried with a hot plate and then pressed with the 7t hydraulic roll press (manufactured by Thank Metal) to obtain a positive electrode.

The obtained positive electrode included a plurality of convex portions on its surface in a cross section in the thickness direction viewed from the X direction perpendicular to the thickness direction. The positive electrode included a non-convex portion between a first convex portion and a second convex portion adjacent to each other among the plurality of convex portions. In the positive electrode, the distance a1 between the vertices of the convex portion and the non-convex portion adjacent to each other was 2,540 μm and the ratio (h3/a1) was 0.0057.

Further, the height h1 of the non-convex portion was 135.3 μm, the height h2 of the convex portion was 148.8 μm, h3=h2-h1 was 14.5 μm, and the ratio (h1/h2) was 0.90.

These results are shown in Table 2.

Further, on the surface of the obtained positive electrode, in the cross section in the thickness direction viewed from the X direction perpendicular to the thickness direction, a line corresponding to a surface of the non-convex portion positioned between the first convex portion and the second convex portion adjacent to each other among the plurality of convex portions, and a line corresponding to a surface of the first convex portion were curved.

Next, for the obtained positive electrode of Example 6, the "porosity d2 of the convex portion and the porosity d1 of the non-convex portion" were measured in the same manner as in Example 1, and the capacity retention rate of the positive electrode was measured in the same manner as in Reference example 1.

The results are shown in Table 2.

Table 2

| | Height h1 of non-convex portion (μm) | Height h2 of convex portion (μm) | h3=h2-hl (μm) | a1 (μm) | h1/h2 | h3/al | Porosity of non-convex portion (%) dl | Porosity of convex portion (%) d2 | Porosity ratio dl/d2 | Evaluation of porosity | Evaluation of capacity retention rate |
|---|---|---|---|---|---|---|---|---|---|---|---|
| Example 1 | 23.2 | 33.0 | 9.8 | 100.6 | 0.70 | 0.097 | 30.5 | 35.0 | 0.87 | Good | Fair |
| Comparative example 2 | 24.1 | 33.1 | 9.0 | 103.8 | 0.73 | 0.087 | 7.8 | 329 | 0.24 | Poor | Poor |
| Comparative example 3 | 99.8 | 203.1 | 103.3 | 101.6 | 0.49 | 1.017 | 42.8 | 34.7 | 1.23 | Poor | Poor |
| Example 2 | 22.1 | 29.7 | 7.6 | 124.2 | 0.74 | 0.061 | 32.3 | 36.3 | 0.89 | Good | Good |
| Example 3 | 98.2 | 144.0 | 45.8 | 1011 | 0.68 | 0.045 | 32.4 | 35.6 | 0.91 | Good | Good |
| Example 4 | 138.7 | 152.5 | 9.7 | 1266 | 0.91 | 0.008 | 30.1 | 36.3 | 0.83 | Good | Excellent |
| Example 5 | 177.5 | 187.6 | 10.1 | 635.3 | 0.95 | 0.016 | 32.3 | 30.4 | 1.06 | Good | Excellent |
| Example 6 | 135.3 | 148.8 | 14.5 | 2540 | 0.90 | 0.006 | 33.3 | 35.1 | 0.95 | Good | Good |

From the results in Table 2, it was found that, according to Example 1 and Comparative examples 2 and 3, Example 1 with a porosity ratio (d1/d2), which is a ratio of the porosity d1 of the non-convex portion and the porosity d2 of the first convex portion, of 0.82 or more and 1.22 or less had the higher capacity retention rate than Comparative examples 2 and 3 with the porosity ratio (d1/d2) of less than 0.82 and more than 1.22, respectively.

Further, it was found that, according to Example 1 and Example 2, if the ratio (h1/h2) of the height h1 of the non-convex portion and the height h2 of the convex portion was 0.71 or more, the capacity retention rate was further increased.

Further, it was found that, according to Examples 4 and 5, and Example 6, if the ratio (h3/h1) was 0.0060 or more and 0.050 or less, the capacity retention rate was further increased.

## Claims

1. An electrode (10) comprising:

   a base material (1); and
   an electrode mixture layer (2) on the base material (1),
   wherein, in a cross section of the electrode (10) in a thickness direction viewed from at least one direction perpendicular to the thickness direction, the electrode mixture layer (2) includes convex portions (2a) and non-convex portions (2b) each positioned between two convex portions (2a1, 2a2) adjacent to each other among the convex portions (2a),
   a ratio (d1/d2) is 0.82 or more and 1.22 or less, where d1 represents a porosity of the non-convex portions (2b) and d2 represents a porosity of the convex portions (2a), wherein the porosity of the non-convex portions (2b) and the convex portions (2a) is measured using a cross-section polisher and a desktop scanning electron microscope (SEM), and including binarization of an SEM image obtained from the SEM,
   in the cross section, a ratio (h1/h2) is 0.71 or more, where h1 (μm) represents a height of the non-convex portions (2b) from a contact surface between the base material (1) and the electrode mixture layer (2), and h2 (μm) represents a height of the convex portions (2a) from the contact surface between the base material (1) and the electrode mixture layer (2), and
   the electrode mixture layer (2) is an active material layer containing an active material.

2. The electrode (10) according to claim 1, wherein in the cross section, a line corresponding to a surface of the non-convex portions (2b) and a line corresponding to a surface of the convex portions (2a) are both curved.

3. The electrode (10) according to claim 1 or 2, wherein, in the cross section, a formula (h2-h1)/a1 satisfies 0.0060 or more and 0.050 or less, where a1 represents a distance between vertices of one of the convex portions (2a) and one of the non-convex portions (2b) adjacent to each other.

4. The electrode (10) according to any one of claims 1 to 3, further comprising an insulating layer or a protective layer on the electrode mixture layer (2).

5. An electrochemical element (52) comprising the electrode (10) according to any one of claims 1 to 4.

6. An electrode production method for producing the electrode (10) according to any one of claims 1 to 4, the electrode production method comprising:
   applying a liquid composition (37, 12A) including an active material and a dispersion medium onto a base material (34, 211) being conveyed in a conveyance direction, to form the convex portions (2a) in the cross section.

7. The electrode production method according to claim 6, wherein the convex portions (2a) are formed in at least one of the conveyance direction and a direction perpendicular to the conveyance direction.

8. The electrode production method according to claim 6 or 7, wherein the liquid composition (37, 12A) is applied by an inkjet method.

## Patentansprüche

1. Elektrode (10), umfassend:

ein Basismaterial (1); und
eine Elektrodenmischungsschicht (2) auf dem Basismaterial (1),
wobei in einem Querschnitt der Elektrode (10) in einer Dickenrichtung von mindestens einer Richtung senkrecht zur Dickenrichtung aus gesehen die Elektrodenmischungsschicht (2) konvexe Abschnitte (2a) und nicht-konvexe Abschnitte (2b) einschließt, die jeweils zwischen zwei konvexen Abschnitten (2a1, 2a2) benachbart zueinander unter den konvexen Abschnitten (2a) angeordnet sind,
ein Verhältnis (d1/d2) 0,82 oder mehr und 1,22 oder weniger beträgt, worin d1 eine Porosität der nicht-konvexen Abschnitte (2b) darstellt und d2 eine Porosität der konvexen Abschnitte (2a) darstellt, wobei die Porosität der nicht-konvexen Abschnitte (2b) und der konvexen Abschnitte (2a) unter Verwendung einer Querschnittspoliermaschine und eines Desktop-Rasterelektronenmikroskops (SEM) gemessen wird, und einschließlich einer Binarisierung eines von dem SEM erhaltenen SEM-Bildes,
in dem Querschnitt ein Verhältnis (h1/h2) 0,71 oder mehr beträgt, worin h1 (μm) eine Höhe der nicht-konvexen Abschnitte (2b) von einer Kontaktfläche zwischen dem Basismaterial (1) und der Elektrodenmischungsschicht (2) darstellt, und h2 (μm) eine Höhe der konvexen Abschnitte (2a) von der Kontaktfläche zwischen dem Basismaterial (1) und der Elektrodenmischungsschicht (2) darstellt, und
die Elektrodenmischungsschicht (2) eine aktive Materialschicht ist, die ein aktives Material enthält.

2. Elektrode (10) nach Anspruch 1, wobei im Querschnitt eine Linie, die einer Oberfläche der nicht-konvexen Abschnitte (2b) entspricht, und eine Linie, die einer Oberfläche der konvexen Abschnitte (2a) entspricht, beide gekrümmt sind.

3. Elektrode (10) nach Anspruch 1 oder 2, wobei im Querschnitt das Ergebnis einer Formel (h2-h1)/a1 0,0060 oder mehr und 0,050 oder weniger erfüllt, worin a1 einen Abstand zwischen Scheitelpunkten eines der konvexen Abschnitte (2a) und eines der nicht-konvexen Abschnitte (2b) benachbart zueinander darstellt.

4. Elektrode (10) nach einem der Ansprüche 1 bis 3, ferner umfassend eine Isolierschicht oder eine Schutzschicht auf der Elektrodenmischungsschicht (2).

5. Elektrochemisches Element (52) umfassend die Elektrode (10) nach einem der Ansprüche 1 bis 4.

6. Elektrodenherstellungsverfahren zur Herstellung der Elektrode (10) nach einem der Ansprüche 1 bis 4, wobei das Elektrodenherstellungsverfahren umfasst:
Aufbringen einer flüssigen Zusammensetzung (37, 12A), die ein aktives Material und ein Dispersionsmedium einschließt, auf ein Basismaterial (34, 211), das in einer Förderrichtung gefördert wird, um die konvexen Abschnitte (2a) im Querschnitt zu bilden.

7. Elektrodenherstellungsverfahren nach Anspruch 6, wobei die konvexen Abschnitte (2a) in mindestens einer von der Förderrichtung und einer Richtung senkrecht zur Förderrichtung gebildet werden.

8. Elektrodenherstellungsverfahren nach Anspruch 6 oder 7, wobei die flüssige Zusammensetzung (37, 12A) durch ein Tintenstrahlverfahren aufgebracht wird.

**Revendications**

1. Électrode (10) comprenant :

un matériau de base (1), et
une couche de mélange d'électrode (2) sur le matériau de base (1),
dans laquelle, dans une coupe transversale de l'électrode (10) dans une direction d'épaisseur, vu à partir d'au moins une direction perpendiculaire à la direction d'épaisseur, la couche de mélange d'électrode (2) inclut des parties convexes (2a) et des parties non convexes (2b) positionnées chacune entre deux parties convexes (2a1, 2a2) adjacentes l'une à l'autre parmi les parties convexes (2a),
un rapport (d1/d2) est égal ou supérieur à 0,82 et inférieur ou égal à 1,22, où d1 représente une porosité des parties non convexes (2b) et d2 représente une porosité des parties convexes (2a), dans laquelle la porosité des parties non convexes (2b) et des parties convexes (2a) est mesurée en utilisant une polisseuse de coupe transversale et un microscope électronique à balayage de bureau (MEB) et en incluant une binarisation d'une image MEB obtenue à partir du MEB,
dans la coupe transversale, un rapport (h1/h2) est supérieur ou égal à 0,71, où h1 (μm) représente une hauteur

des parties non convexes (2b) à partir d'une surface de contact entre le matériau de base (1) et la couche de mélange d'électrode (2) et h2 (μm) représente une hauteur des parties convexes (2a) à partir de la surface de contact entre le matériau de base (1) et la couche de mélange d'électrode (2), et
la couche de mélange d'électrode (2) est un couche de matériau actif contenant un matériau actif.

**2.** Électrode (10) selon la revendication 1, dans laquelle, dans la coupe transversale, une ligne correspondant à une surface des parties non convexes (2b) et une ligne correspondant à une surface des parties convexes (2a) sont toutes deux courbées.

**3.** Électrode (10) selon la revendication 1 ou 2, dans laquelle, dans la coupe transversale, le résultat d'une formule (h2-h1)/a1 satisfait être égal ou supérieur à 0,0060 et inférieur ou égal à 0,050, où a1 représente une distance entre des sommets de l'une des parties convexes (2a) et de l'une des parties non convexes (2b) adjacentes l'une à l'autre.

**4.** Électrode (10) selon l'une quelconque des revendications 1 à 3, comprenant en outre une couche d'isolation ou une couche de protection sur la couche de mélange d'électrode (2).

**5.** Élément électrochimique (52) comprenant l'électrode (10) selon l'une quelconque des revendications 1 à 4.

**6.** Procédé de production d'électrode pour produire l'électrode (10) selon l'une quelconque des revendications 1 à 4, le procédé de production d'électrode comprenant :
l'application d'une composition liquide (37, 12A) incluant un matériau actif et un fluide de dispersion sur un matériau de base (34, 211) étant transporté dans une direction de transport, pour former les parties convexes (2a) dans la coupe transversale.

**7.** Procédé de production d'électrode selon la revendication 6, dans lequel les parties convexes (2a) sont formées dans au moins une direction parmi la direction de transport et une direction perpendiculaire à la direction de transport.

**8.** Procédé de production d'électrode selon la revendication 6 ou 7, dans lequel la composition liquide (37, 12A) est appliquée par un procédé de jet d'encre.

FIG. 1

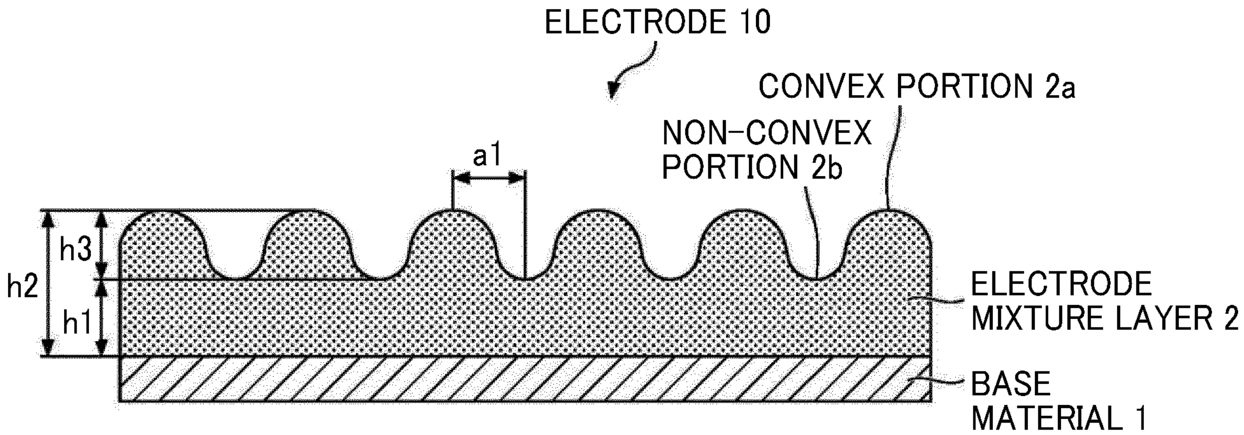
ELECTRODE 10
CONVEX PORTION 2a
NON-CONVEX PORTION 2b
a1
h3
h2
h1
ELECTRODE MIXTURE LAYER 2
BASE MATERIAL 1

FIG. 2

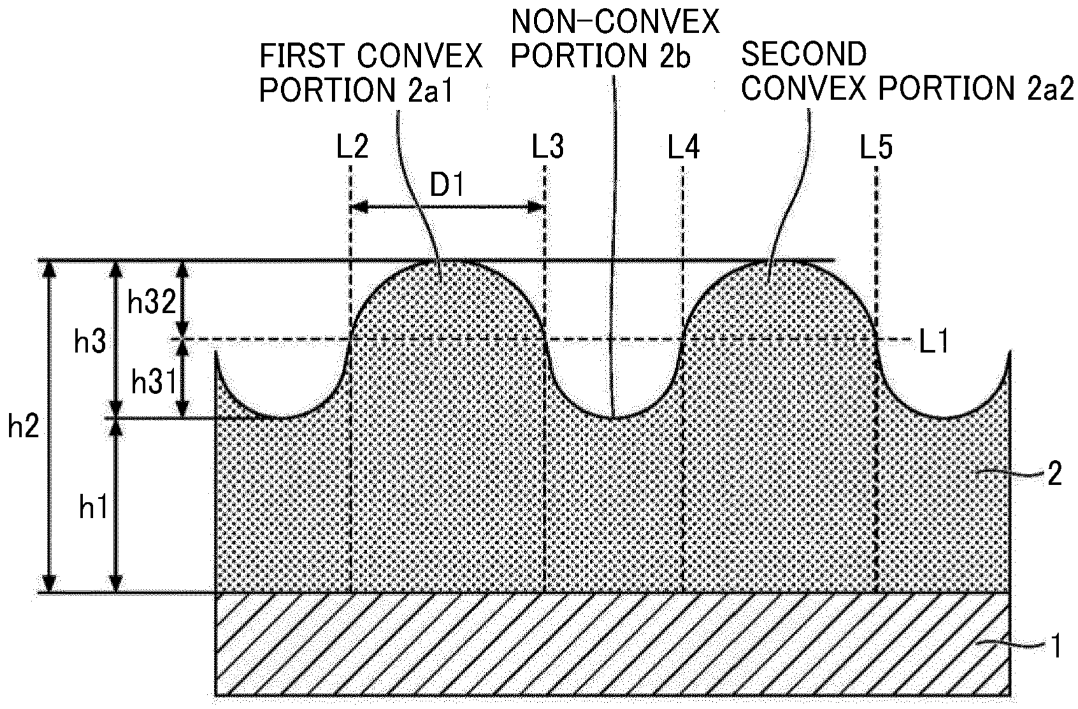
FIRST CONVEX PORTION 2a1
NON-CONVEX PORTION 2b
SECOND CONVEX PORTION 2a2
L2
L3
L4
L5
D1
h32
h3
h31
L1
h2
h1
2
1

FIG. 3

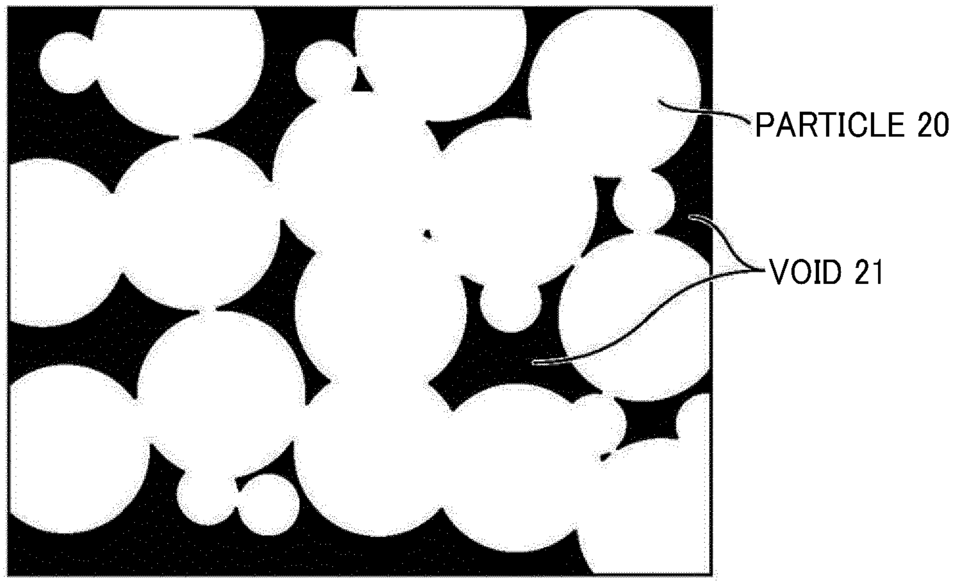


FIG. 4

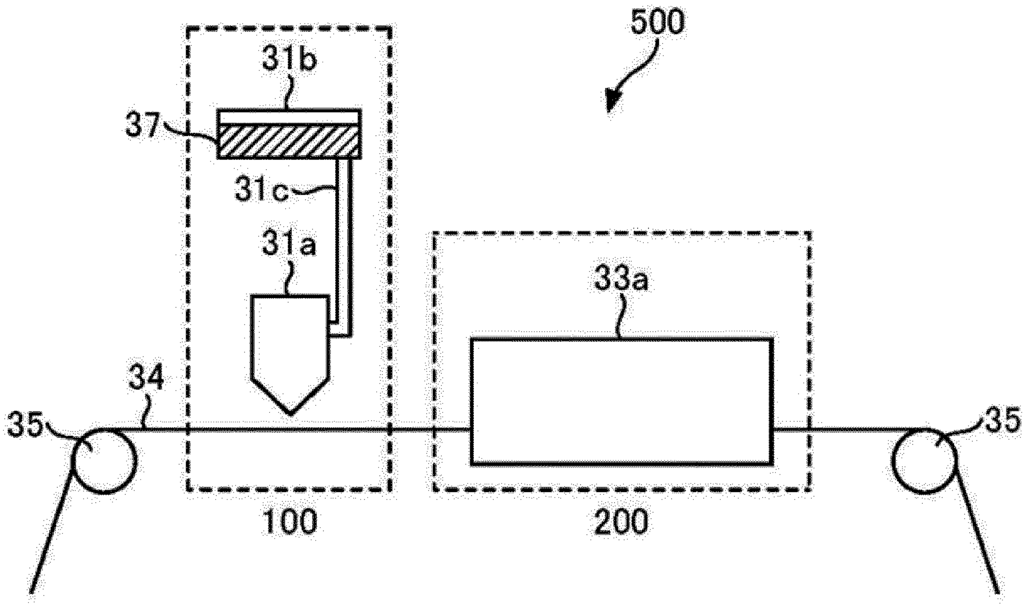

FIG. 5

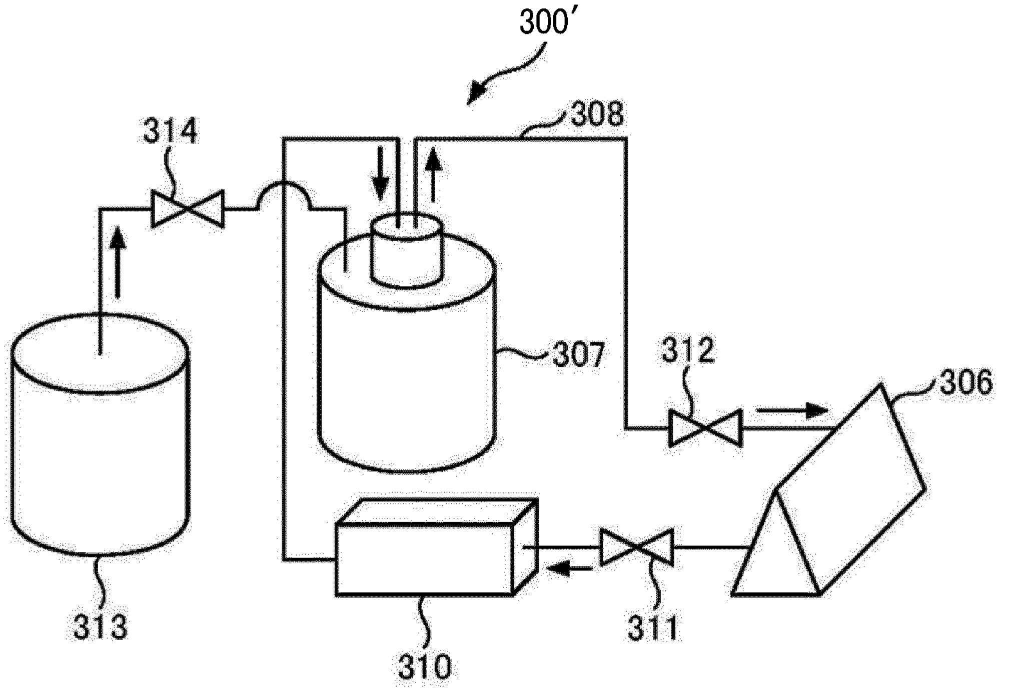

FIG. 6

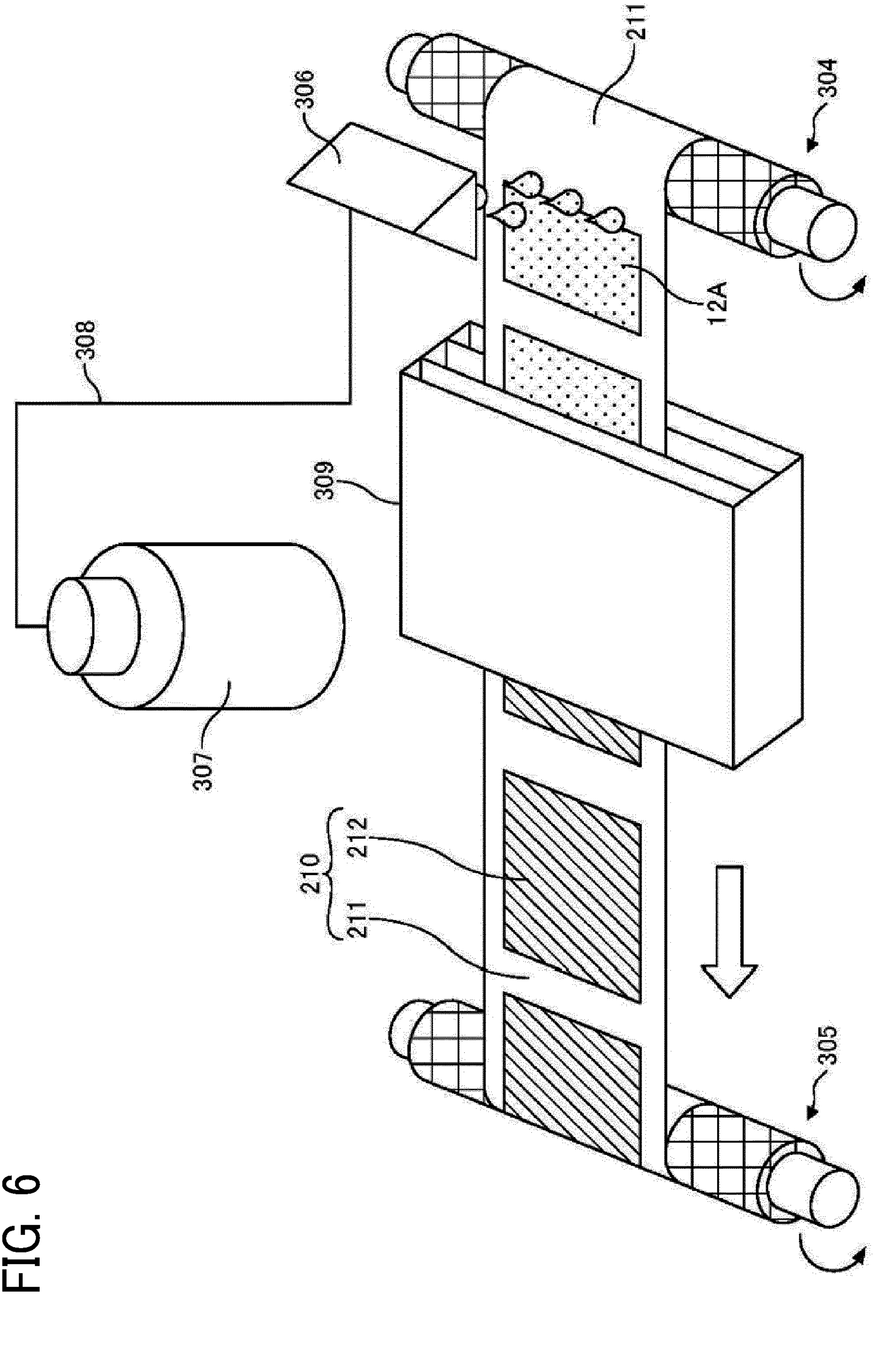

FIG. 7

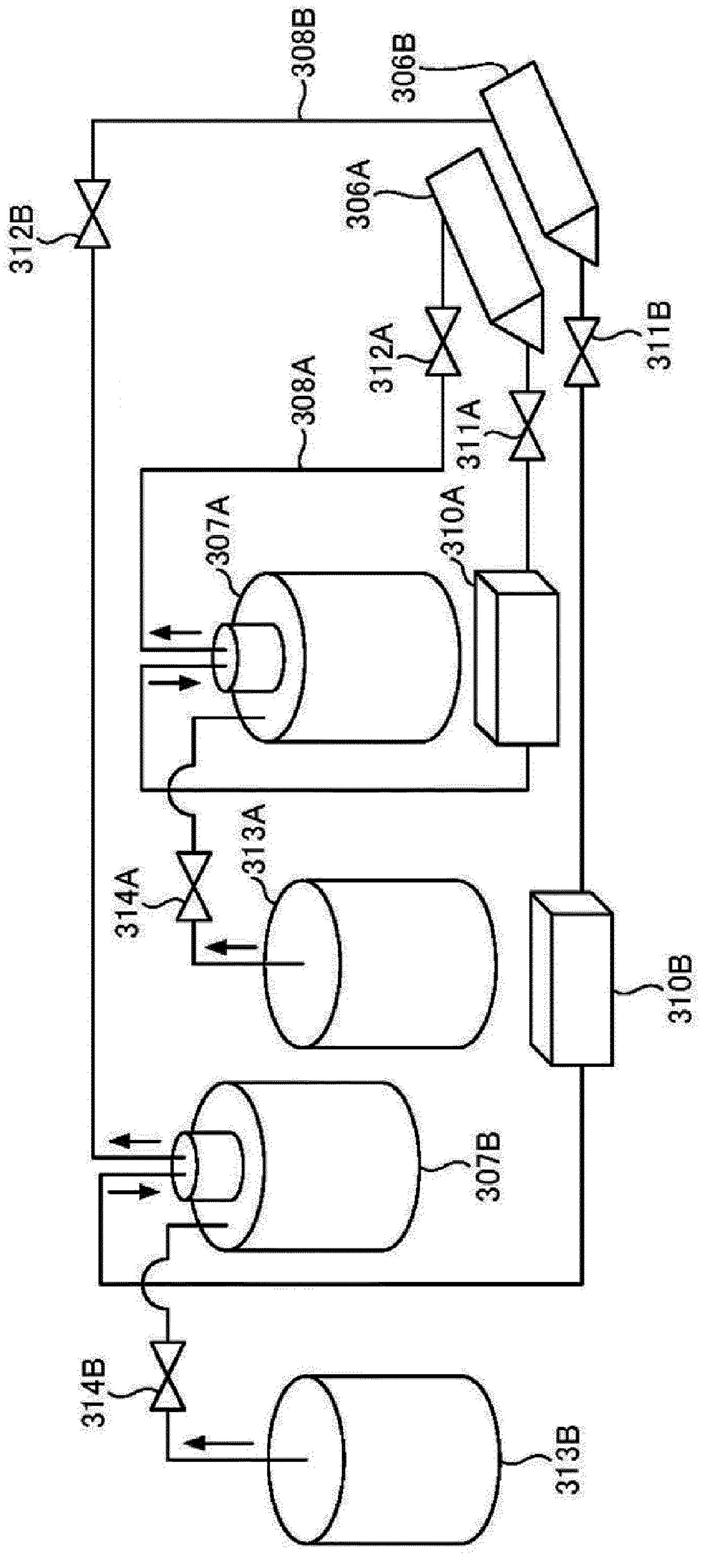
308B
306B
306A
312B
312A
308A
311B
311A
307A
310A
313A
314A
310B
307B
314B
313B

FIG. 8

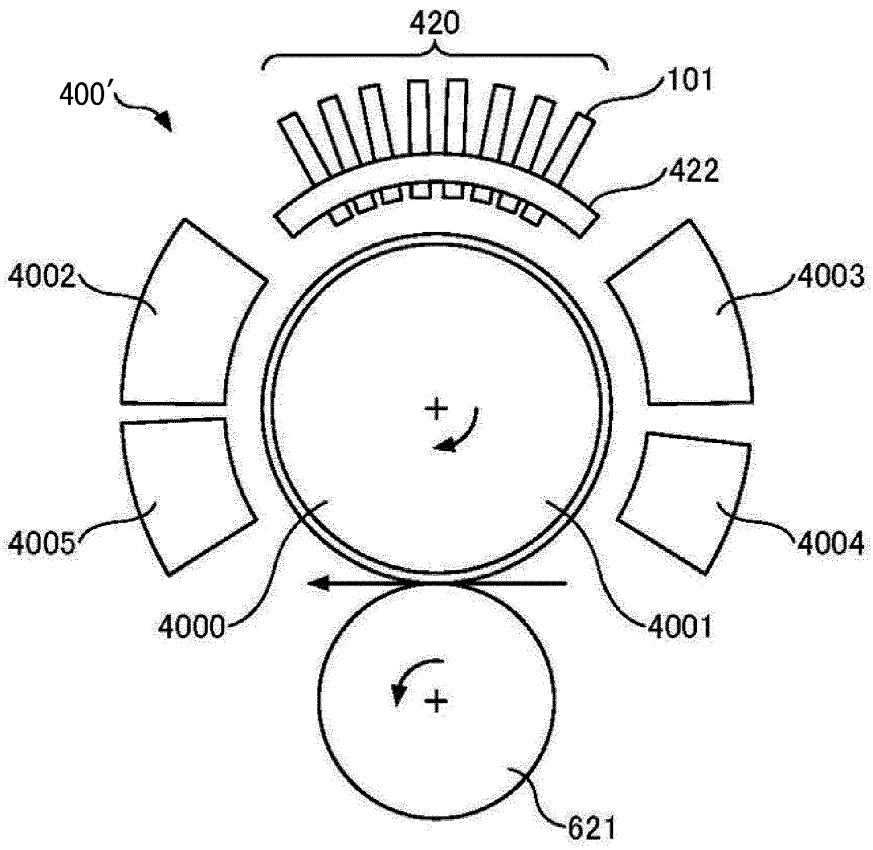
420
400'
101
422
4002
4003
4005
4004
4000
4001
621

FIG. 9

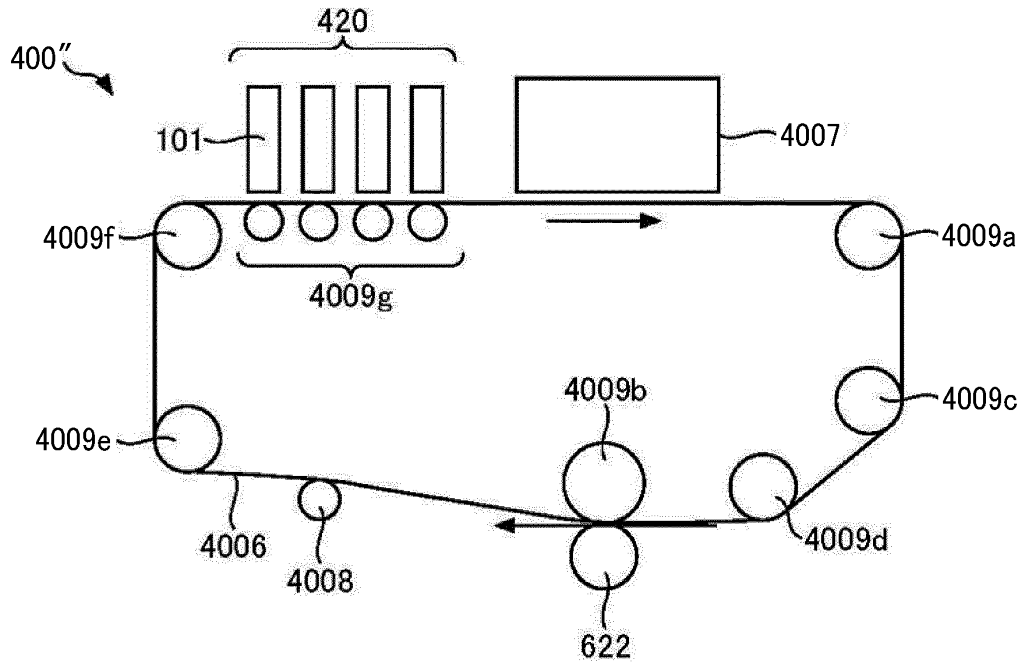
420
400"
101
4007
4009f
4009a
4009g
4009b
4009c
4009e
4009d
4006
4008
622

FIG. 10

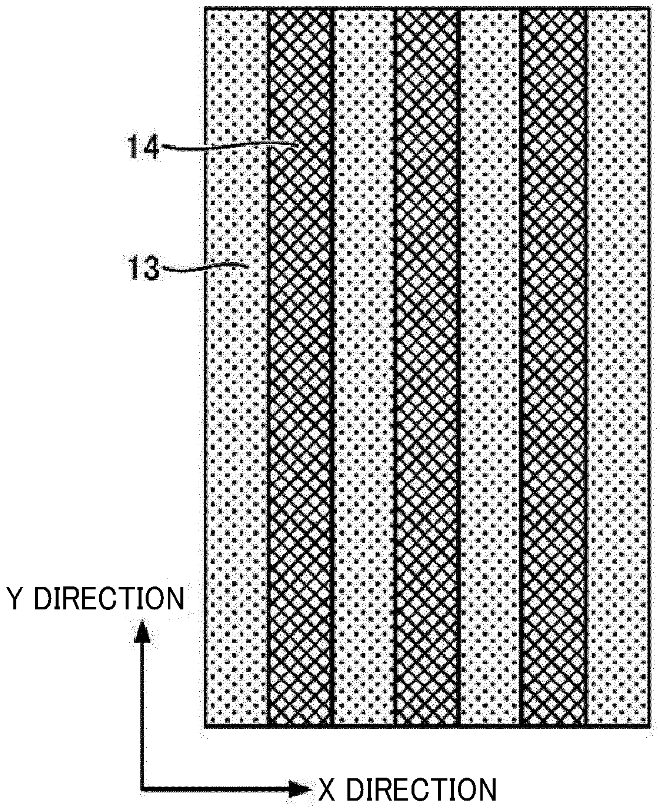


FIG. 11

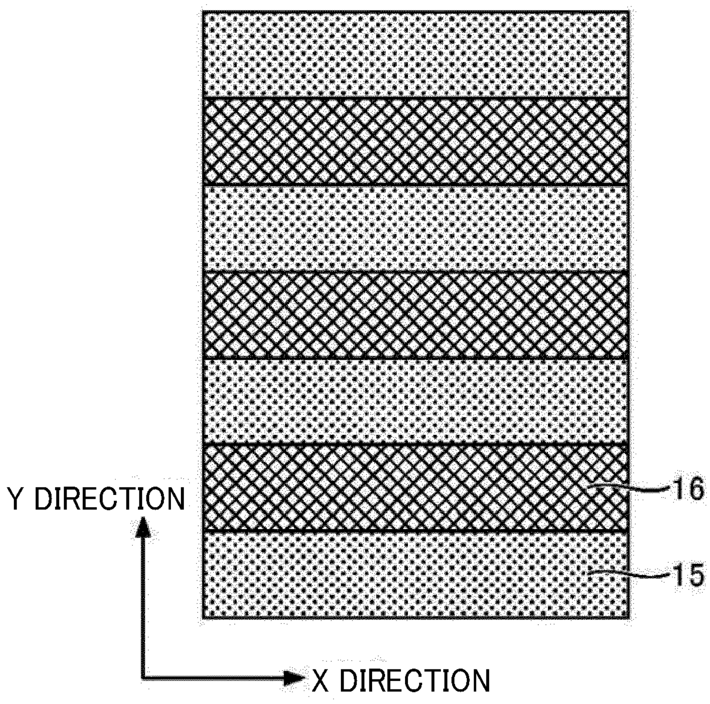

FIG. 12

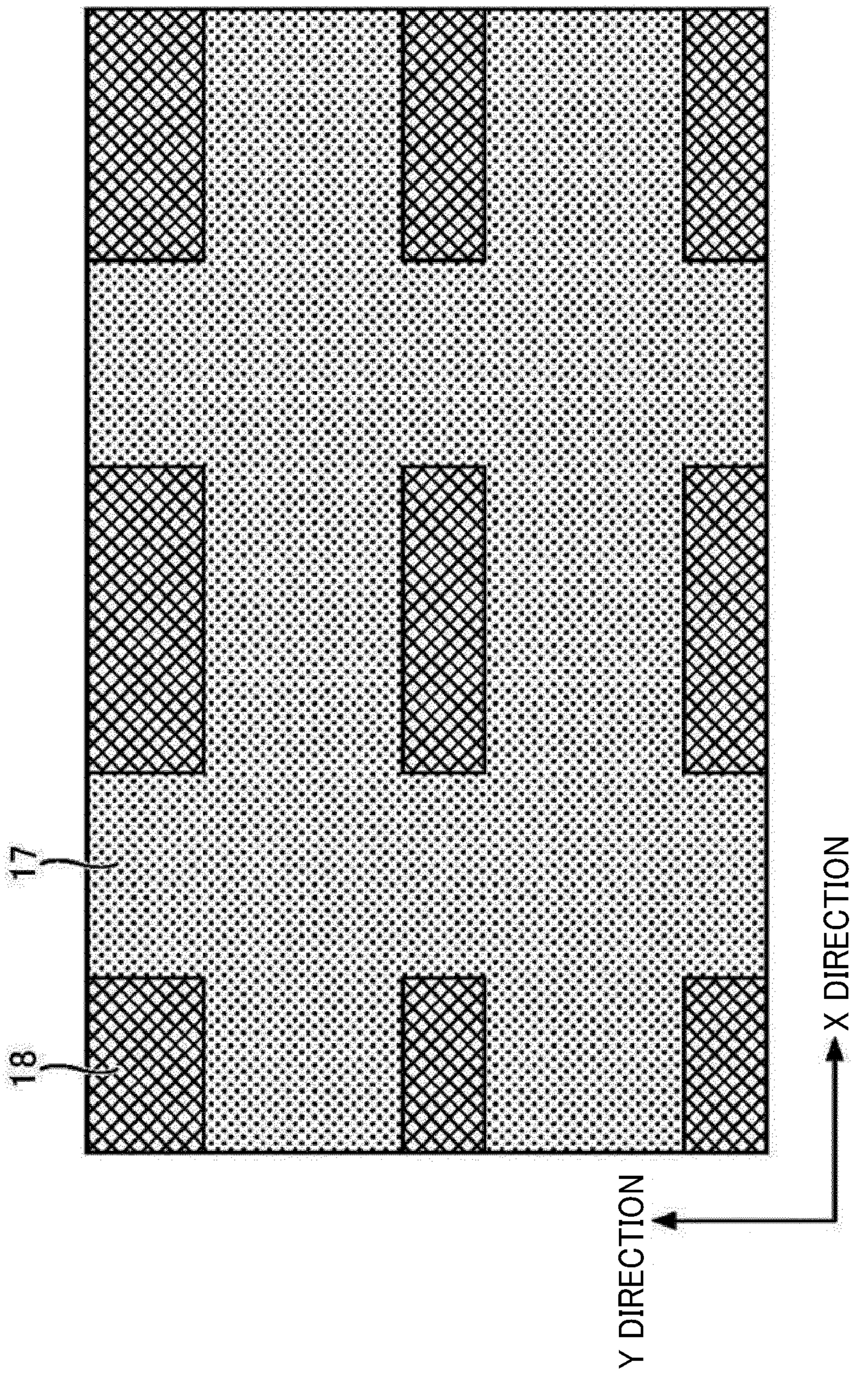

FIG. 13A

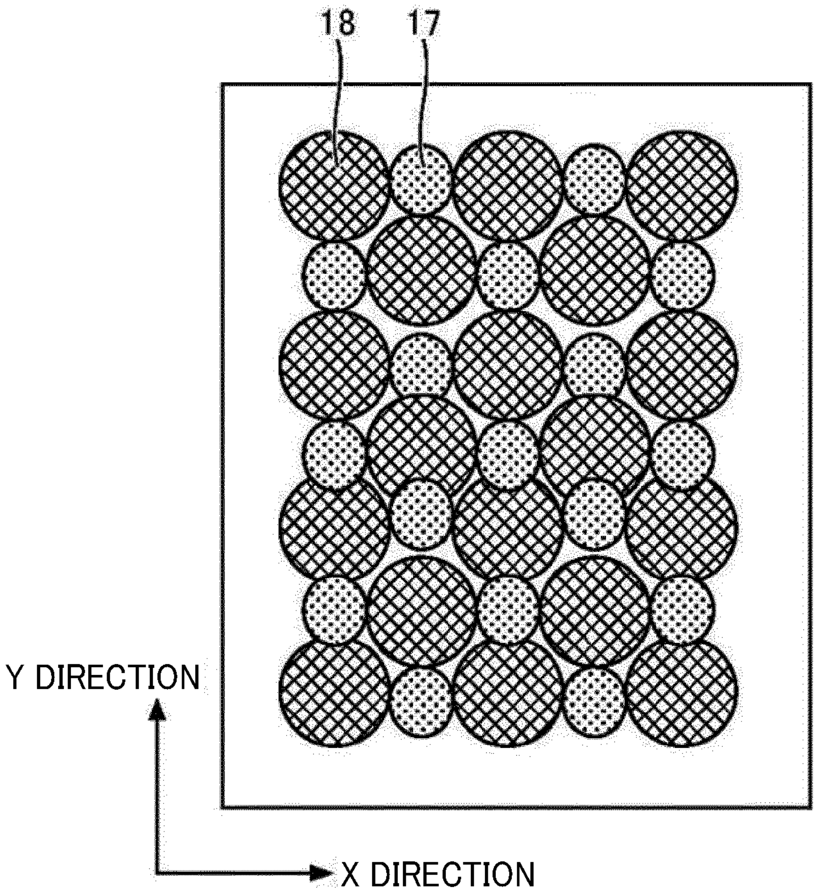


FIG. 13B

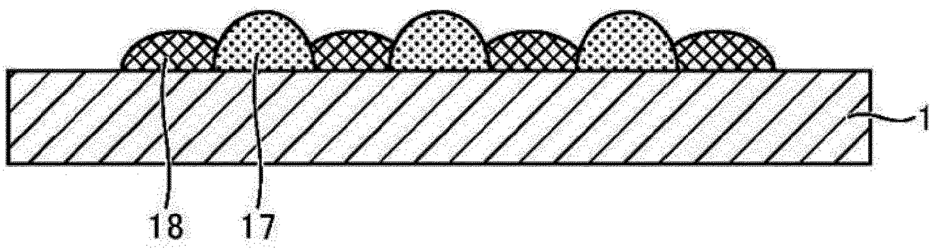

FIG. 14

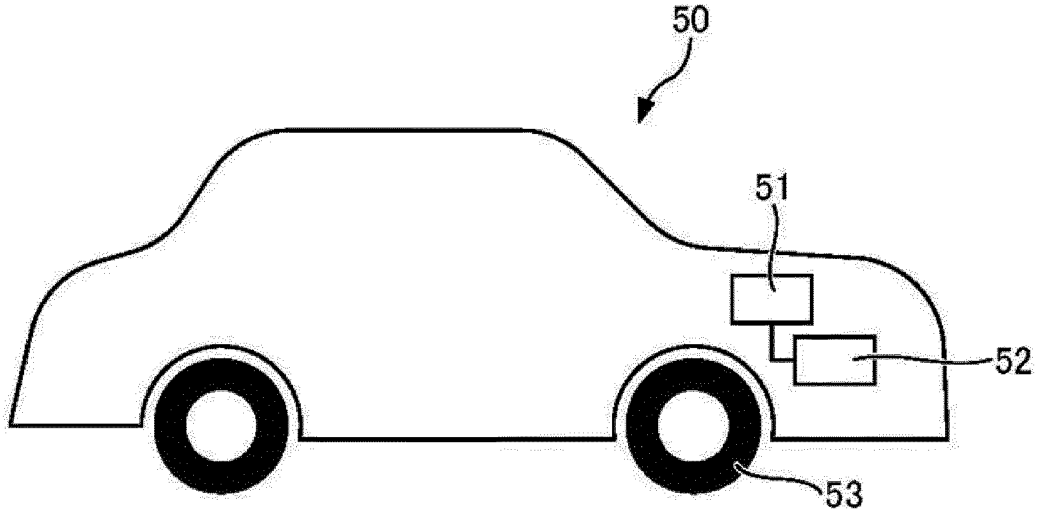


FIG. 15
COMPARATIVE EXAMPLE

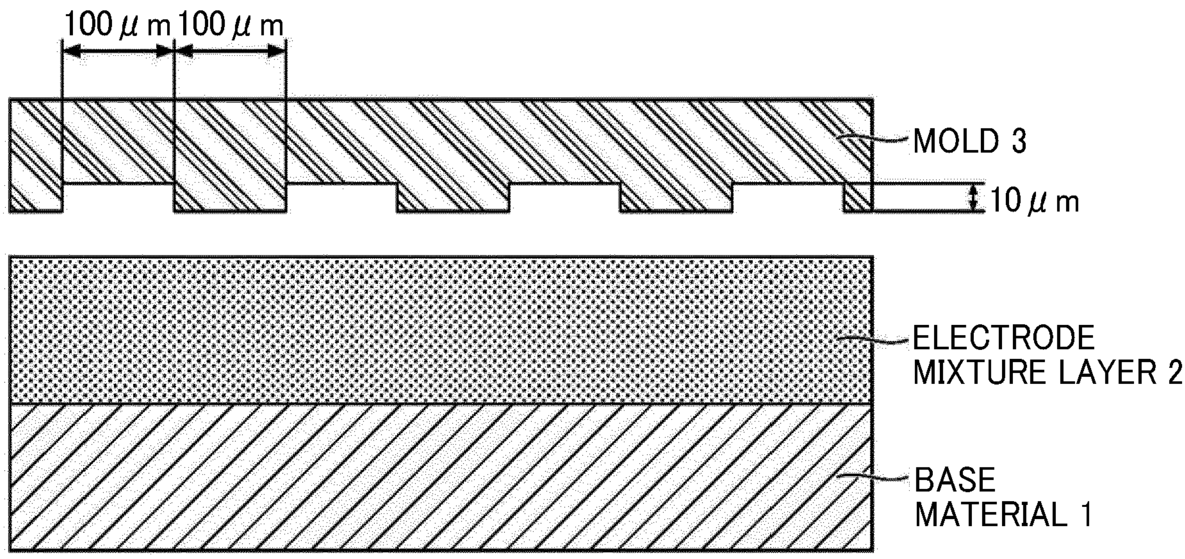

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008010253 A
- JP 2019110110 A
- US 2012015253 A